(19) **Europäisches Patentamt European Patent Office Office européen des brevets**

(11) **EP 3 552 104 B1**

(12) **EUROPEAN PATENT SPECIFICATION**

(45) Date of publication and mention of the grant of the patent:
**23.06.2021 Bulletin 2021/25**

(21) Application number: **17851914.6**

(22) Date of filing: **06.12.2017**

(51) Int Cl.:
***G06F 9/50*** (2006.01)

(86) International application number:
**PCT/US2017/064849**

(87) International publication number:
**WO 2018/106772 (14.06.2018 Gazette 2018/24)**

(54) **COMPUTATIONAL RESOURCE ALLOCATION**

ZUWEISUNG VON COMPUTERRESSOURCEN

ATTRIBUTION DE RESSOURCES DE CALCUL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2016 US 201662431505 P**

(43) Date of publication of application:
**16.10.2019 Bulletin 2019/42**

(73) Proprietor: **AB Initio Technology LLC Lexington, Massachusetts 02421 (US)**

(72) Inventors:
• **CHU, Jacky Cheuk Kei Brighton, MA 02135 (US)**
• **SCHMIDT, Stephen J. Medford, MA 02155 (US)**
• **WANG, Bo Newton, MA 02460-2032 (US)**

(74) Representative: **Herrmann, Daniel Boehmert & Boehmert Anwaltspartnerschaft mbB Pettenkoferstrasse 22 80336 München (DE)**

(56) References cited:
**US-A1- 2005 210 262     US-A1- 2012 167 112**

**Description**

**TECHNICAL FIELD**

This description relates to allocation of computational resources in a computing system.

**BACKGROUND**

Applications that run on computing systems require a portion of the computing system's computational resources to do so. The computing system must therefore manage allocation of its resources to applications running thereon. Some examples of resources that are allocated to applications include access to a portion of the computing system's memory, access to file data, and access to a required amount of processing power.

In distributed computing systems, computational resources (including data storage and processing resources) are distributed among a number of servers included in one or more clusters that work together to run data processing applications. In some examples, distributed computing systems use a centralized resource manager, which both schedules execution of applications on the computing system and manages allocation of the computing system's distributed resources to the applications. One such resource manager is "Hadoop YARN."

US 2012/167112 A1 describes that a job request is received, which specifies a parallel data integration job to deploy in a grid. Grid resource utilizations are predicted for hypothetical runs of the specified job on respective hypothetical grid resource configurations. This includes automatically predicting grid resource utilizations by a resource optimizer module responsive to a model based on a plurality of actual runs of previous jobs. A grid resource configuration is selected for running the parallel data integration job, which includes the optimizer module automatically selecting a grid resource configuration responsive to the predicted grid resource utilizations and an optimization criterion.

US 2005/210262 A1 describes a method and a system for policing resources in a computing utility facility that includes policing resources in a computing utility facility includes intercepting a request for resources from an application admitted to access a pool of resources associated with the computing utility facility, acquiring an entitlement profile associated with the application to determine if application is entitled to requested resources over a time period, identifying an entitlement value and corresponding sliding window of the time period from the entitlement profile, determining if the request for resources exceeds the entitlement value associated with the sliding window and indicating application entitlement to the request for resources in response to the determining if the request is excessive.

**SUMMARY**

The present invention relates to a method according to independent claim 1, to a computer-readable medium according to independent claim 18 and to a computing system according to independent claim 19. Preferred embodiments are described in dependent claims 2 to 17.

Among other advantages, the present invention allocates computational resources of a computing system to program portions, such as data processing components, of a computer program, such as a data processing graph, such that no one of the data processing components is allocated more computational resources than it needs while another program portion is starved of computational resources. Thus, the techniques described herein reduce break down of computational resources of the computing system that may be overloaded by data processing tasks while other computational resources of the computing system are not fully engaged with data processing tasks. These techniques hence contribute to more efficient usage of the computational resources of the computing system executing the computer program, such as the data processing graph, and therefore enhance and ensure the proper internal functioning of the computing system. Another technical effect of the techniques described herein is the effect on the computer program, such as the data processing graph, being executed on the computing system. For example, by facilitating overall balanced allocation of the computational resources of the computing system, a greater number of computer programs, such as data processing graphs, may be able to execute concurrently, and/or some of the computer programs, such as data processing graphs, may be able to start sooner by not having to wait as long to acquire the necessary computational resources of the computing system needed to execute.

Other features and advantages of the invention will become apparent from the following description, figures, and from the claims.

This Summary is provided to introduce a selection of concepts in a simplified form that are further described below in the Detailed Description. This Summary is not intended to identify key features or essential features of the claimed subject matter.

**DESCRIPTION OF DRAWINGS**

FIG. 1 is a block diagram of a system for allocation of distributed computational resources.

FIG. 2A is a detailed block diagram of the system for allocation of distributed computational resources.

FIG. 2B is diagram of an example of a data processing graph.

FIG. 3 is a flowchart of a distributed computational resource allocation algorithm.

FIG. 4 is the block diagram of FIG. 2 after completion of the first step of the computational resource allocation algorithm.

FIG. 5 is the block diagram of FIG. 2 after completion of the second step of the computational resource allocation algorithm.

FIG. 6 is the block diagram of FIG. 2 during the third step of the computational resource allocation algorithm.

FIG. 7 is the block diagram of FIG. 2 during the fifth step of the computational resource allocation algorithm.

FIG. 8 is the block diagram of FIG. 2 during a first part of the seventh step of the computational resource allocation algorithm.

FIG. 9 is the block diagram of FIG. 2 during a second part of the seventh step of the computational resource allocation algorithm.

FIG. 10 is the block diagram of FIG. 2 during a third part of the seventh step of the computational resource allocation algorithm.

FIG. 11 is the block diagram of FIG. 2 during a first iteration of the ninth step of the computational resource allocation algorithm.

FIG. 12 is the block diagram of FIG. 2 during a second iteration of the ninth step of the computational resource allocation algorithm.

FIG. 13 is the block diagram of FIG. 2 during a third iteration of the ninth step of the computational resource allocation algorithm.

FIG. 14 is the block diagram of FIG. 2 during a fourth iteration of the ninth step of the computational resource allocation algorithm.

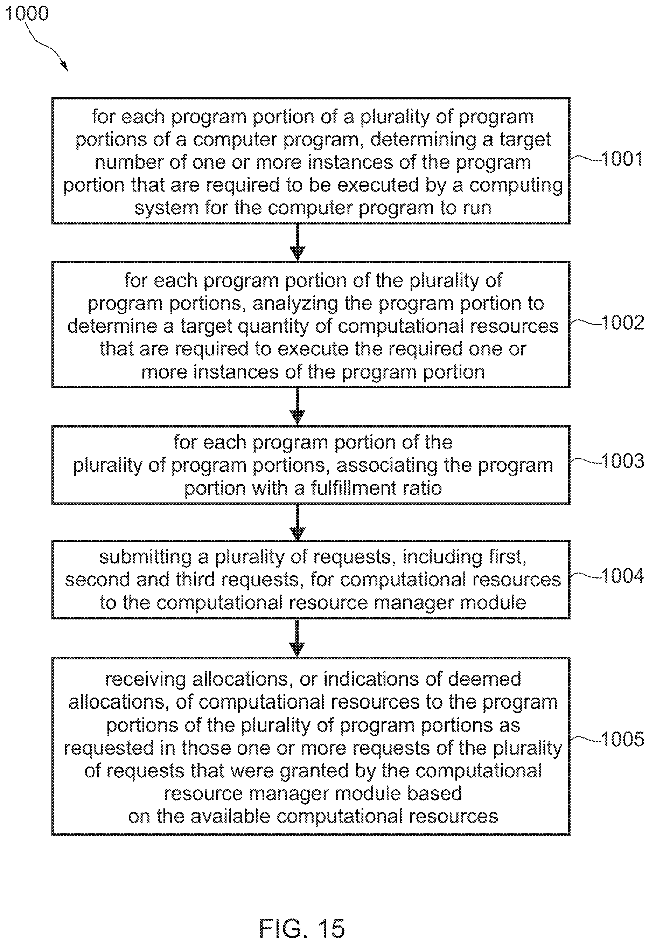

FIG. 15 illustrates a process flow according to which computational resources can be allocated.

**DESCRIPTION**

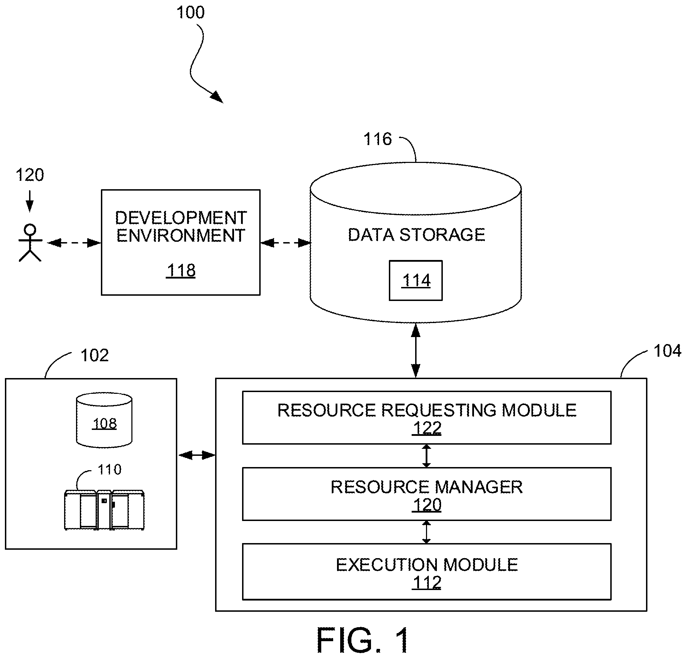

FIG. 1 shows an example of a computing system 100 or data processing system 100 in which the computational resource allocation techniques can be used.

The system 100 includes a data source 102 that includes one or more sources of data such as storage devices or connections to online data streams, each of which stores or provides data in any of a variety of formats (e.g., database tables, spreadsheet files, flat text files, or a native format used by a mainframe). An execution environment 104 includes an execution module 112, a resource manager 120, and a resource requesting module 122. The execution environment 104 is hosted, for example, on one or more general-purpose computers (each having a central processing unit, CPU) under the control of a suitable operating system, such as a version of the UNIX operating system. For example, the execution environment 104 may be a multiple-node parallel computing environment being hosted on a configuration of computer systems using multiple central processing units (CPUs) or processor cores, either local (e.g., multiprocessor systems such as symmetric multiprocessing (SMP) computers), or locally distributed (e.g., multiple processors coupled as clusters or massively parallel processing (MPP) systems, or remote, or remotely distributed (e.g., multiple processors coupled via a local area network (LAN) and/or wide-area network (WAN)), or any combination thereof.

Some examples of the term "computational resources", which are allocated to one or more computer programs (such as one or more data processing graphs), as used throughout this application, include one or more of access to a portion of the computing system's memory (such as primary memory), access to data storage (such as file data stored on a disc) of the computing system 100, and access to a required amount of processing power (such as access to a CPU) of the computing system 100. Throughout this application, the term "computational resources", which are allocated to computer programs (such as data processing graphs), can more specifically include one or more of access to a portion of memory (such as primary memory) accessible by the execution environment 104, access to data storage (such as data source 102 or data storage 116) accessible by the execution environment 104, and access to a required amount of processing power of the execution environment 104 (such as access to CPU or virtual cores accessible by the execution environment 104).

A data storage system 116 is accessible to the execution environment 104 and to an optional development environment 118. The development environment 118 is a
system for developing the computer programs, such as the data processing graphs mentioned herein. The data storage system 116 may be local to the execution environment 104, for example, being stored on a storage medium connected to a computer hosting the execution environment 104 (e.g., hard drive), or may be remote to the execution environment 104, for example, being hosted on a remote system (e.g., mainframe) in communication with a computer hosting the execution environment 104, over a remote connection (e.g., provided by a cloud computing infrastructure).

For example, such an environment for developing graph-based computations is described in more detail in U.S. Publication No. 2007/0011668, titled "Managing Parameters for Graph-Based Applications,". A system for executing such graph-based computations is described in U.S. Patent 5,966,072, titled "EXECUTING COMPUTATIONS EXPRESSED AS GRAPHS,". Data processing graphs, e.g. made in accordance with this system, provide methods for getting information into and out of individual processes represented by graph components, for moving information between the processes, and for defining a running order for the processes. This system may include algorithms that choose interprocess communication methods from any available methods (for example, communication paths according to the links of the graph can use TCP/IP or UNIX domain sockets, or use shared memory to pass data between the processes).

The execution module 112 processes data from the data source 102 according to the one or more computer programs 114, such as the one or more data processing graphs 114, using computational resources allocated by the resource manager 120, to generate output data which may be stored back in the data source 102, or stored in the data storage system 116, or otherwise used. Storage devices providing the data source 102 may be local to the execution environment 104, for example, being stored on a storage medium connected to a computer hosting the execution environment 104 (e.g., hard drive 108), or may be remote to the execution environment 104, for example, being hosted on a remote system (e.g., mainframe 110) in communication with a computer hosting the execution environment 104, over a remote connection (e.g., provided by a cloud computing infrastructure). In some examples, the data source 102, includes one or more (e.g. different) forms of database systems including data that may be organized as records having values for respective fields (also called "attributes" or "columns"), including possibly null values.

The resource manager 120 schedules execution of the one or more computer programs 114, such as the one or more data processing graphs 114, on the execution environment 104 and manages allocation of the computing system's, or more specifically of the execution environment's, computational resources to the computer programs or data processing graphs 114. As is described in greater detail below, for computer programs that include program portions, such as data processing graphs that include a number data processing components, the resource requesting module 122 interacts with the resource manager 120 to allocate computational resources to the program portions, such as data processing components, such that no one program portion or data processing component is allocated more computational resources than it needs while another program portion component is starved of computational resources.

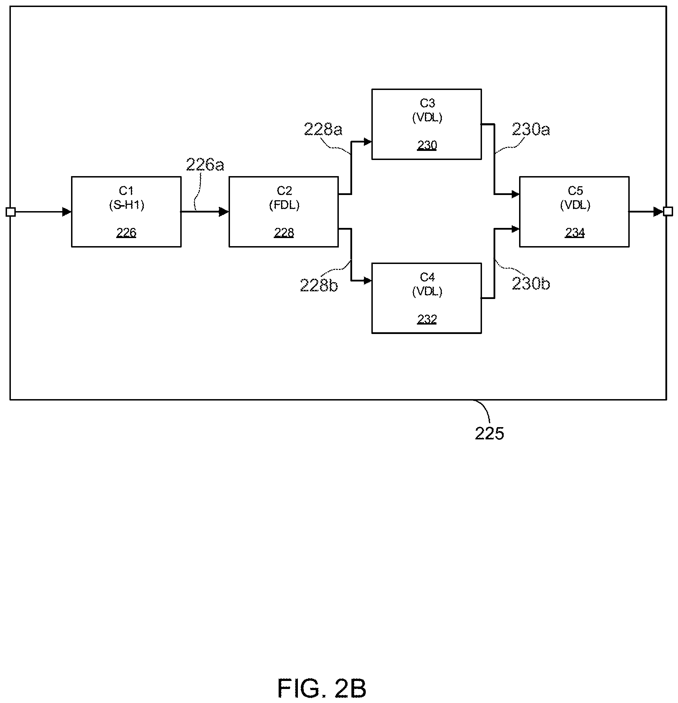

The one or more computer programs 114, such as the one or more data processing graphs 114, can be configured or programmed in a variety of ways such that different portions thereof (e.g., program portions such as data processing components of the data processing graph) are associated with specific (e.g. different) target quantities of computational resources to be allocated for use at runtime. The target quantities are determined based on the minimum required quantity of computational resources that are needed by the respective program portion to execute all its one or more instances properly or fully, e.g., to fully process (without failure) a given amount of input data associated with or to be processed by the respective program portion and/or to execute on a given input data all data processing tasks associated with the instances, implemented by the program portion and associated with the input data without execution failure. The minimum required quantity of computational resources may be a minimum number of CPUs, virtual cores and/or portions of primary memory associated with the program portion that are required to be consumed in parallel when the instance's program portion is to be executed. These computer programs 114, as used throughout the present application, may be data processing programs that process data during runtime, such as data received from the data source 102. One example of such a data processing program is the data processing graph 114 as mentioned throughout the present application (which can also be called "dataflow graph") that can be represented by a directed graph that includes vertices (representing the data processing components or datasets) connected by directed links or data flow connections (representing flows of work elements, i.e., data) between the vertices. An example 225 of the data processing graph 114 is illustrated in FIG. 2B. In FIG. 2B, the data processing components are C1 to C5 (also labelled as 226, 228, 230, 232 and 234). The links or data flow connections are labelled in FIG. 2B as 226a, 228a, 228b, 230a and 230b. The program portions of the computer program as described throughout this application can also be connected by dataflow connections which provide flow of data between the program portions. The number of data processing components or program portions and the number of links or data flow connections is chosen in this application for illustrative purposes only and can each be any other number. In addition to these links or data flow connections, some data processing graphs may also have control flow connections for determining and/or adjusting of data flow between data processing components. In the data processing graphs described throughout this application, the data processing components can be the program portions and can be interrelated or interdependent according to their links or data flow connections. The data processing components can be separately granted computing resources for being executed. In other examples of the computer program, the program portions are sub-modules or other data processing entities within the computer program that are separately granted computing resources for being executed. The program portions, such as data processing components, as described throughout this application are considered "interrelated or interdependent" to the extent that the ability of the overall computer program to which they belong, such as the data processing graph, to be executed depends on the abilities of the individual program portions to be executed. In an example, if one of the program portions cannot execute, the overall computer program to which they belong to cannot execute. Such interrelated or interdependent program portions may also be dependent on each other for execution. For example, one program portion may receive data from or provide data to another program portion. Also, while the program portions, such as data processing components, are separately granted computing resources of the computing system, they may overlap, be interrelated or be interdependent in various other ways (e.g., competing for a limited supply of computing resources). The term "program portion" (or "data processing component") as used throughout this application may be a piece of software code (also called "programming code"), wherein the computer program (or dataflow graph) may be formed by its program portions (or data processing components).

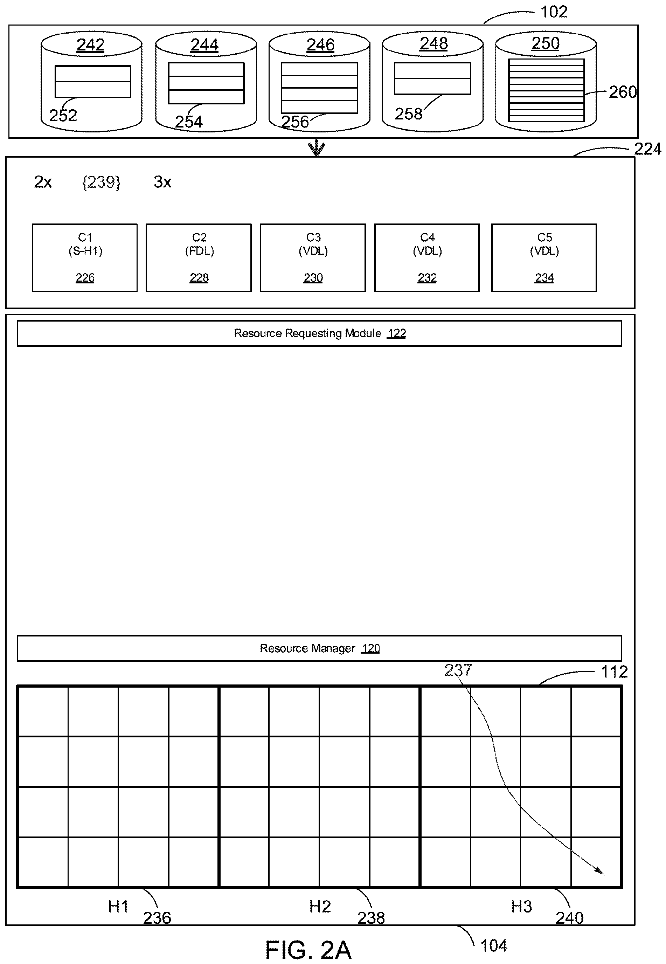

Referring to FIG. 2A, a more specific representation of the computing system 100 / data processing system 100 described above in context of FIG. 1 includes the execution environment 104, the data source 102, and the computer program or data processing graph 224 for processing data from the data source 102 using computational resources of the execution environment 104.

The execution environment 104 includes the resource requesting module 122, the resource manager 120, and the execution module 112. Among other features, the execution module 112 includes the computational resources which may be distributed across and/or allocated to multiple hosts (e.g., computing clusters such as servers). In FIG. 2A, there are three hosts: a first host HI 236, a second host, H2 238, and a third host, H3 240. Each host includes a finite amount or number of computational resources which taken together include the total computational resources of the execution module 112. Examples of the computational resources being managed and allocated by the resource manager 120 may include any of: a usage share of a host's processor (e.g., specified as virtual cores that map to physical cores of one or more multi-core processors), a portion of volatile memory of a host (e.g., specified a quantity of the host's main memory space), a portion of non-volatile memory of a host (e.g., specified as a quantity of the host's hard disk drive storage space), or a usage share of a communication channel (e.g., a fraction of the bandwidth of a host's Ethernet interface). A single unit 237 of computational resources may include one or more of multiple types of computational resources, such as a specified number of CPUs or virtual cores and a specified amount of main/primary memory or number of (virtual) main/primary memory portions. The CPU may be a processor.

In FIG. 2A, for the sake of simplifying the explanation of the computational resource allocation approaches described herein, the entirety of computational resources of the hosts is formed by one or more computational resource units 237 (illustrated as squares within the hosts in FIG. 2A), which are all shown as having the same granularity (i.e., the smallest size that can be granted). However, it is noted that the computational resources are not necessarily segmented into units 237 with a fixed and equal granularity but can instead be segmented into units of various granularities or portioned using other, alternative approaches. Furthermore, for the sake of simplifying the explanation of the computational resource allocation approaches described herein, all of the hosts in the execution module 112 of FIG. 2A are shown as having the same number (i.e., 16) of computational resource units 237. However, it is noted that, in general, different hosts may have different amounts of computational resources, e.g. by having different numbers of computational resource units 237.

The resource manager 120 receives requests for the computational resources and either grants or denies the requests based on an amount of available computational resources in the hosts 236, 238, 240 of the execution module 112. One example of such a resource manager 120 includes the "Hadoop YARN" resource manager which is capable of receiving a request for computational resources for executing a computer program (or program portion) and, if sufficient computational resources are available, grants a 'container', e.g. one container for each instance of the program portion, with some number of units of the computational resources for use by the computer program. A container can be implemented as any suitable data structure for containing a particular quantity of computational resources, or containing any information that identifies a particular quantity of computational resources, or any combination thereof. The computer program may then execute using the computational resources in the granted container. In some examples, the computer program can request multiple containers of computational resources at one time (e.g., a number of containers for running concurrent instances 239 of a portion of the program or for running multiple portions of the program) from the resource manager 120. If sufficient resources are available for the resource manager 120 to grant all of the requested multiple containers to the computer program, it will do so. Otherwise, based on the available resources, the resource manager 120 may grant only some of the requested containers (i.e., an integer number of containers less than the total number of containers requested), or the resource manager 120 may not grant any of the requested containers. In some implementations, all of the computational resources associated with a given container are derived from a single host. Alternatively, in other implementations, a given container's resources may be derived from multiple hosts.

As is described in greater detail below, the resource requesting module 122 interacts with the resource manager 120 in a way that ensures that a number of constraints imposed by the computer program, such as the data processing graph 224, are satisfied, and/or are satisfied in a more balanced manner.

The data processing graph 224 is a specification or example of the computer program for processing data received from the data source 102. FIG. 2B shows an example 225 of a graph-based specification of the data processing graph 224, which includes a number of (e.g. interrelated or interdependent) data processing components including a first data processing component, C1 226, a second data processing component, C2 228, a third data processing component, C3 230, a fourth data processing component, C4 232, and a fifth data processing component, C5 234.

In general, each data processing component of the data processing graph described throughout this application may be associated with one or more constraints. Such a constraint may be a 'layout' that specifies constraints related to parallelization of instances 239 of the data processing component. One of the constraints specified in the layout may be a 'layout type' which can take one of a number of values including a static (S) layout type, a fixed-depth dynamic layout (FDL) type, and a variable-depth dynamic layout (VDL) type. The one or more constraints, such as the different layout types, may specify a target number of and/or an execution location for component instances of the data processing component that are executable or to be executed in parallel during execution of the data processing component. For each data processing component, the target number of component instances may be determined based on the associated number of data elements to be processed by the data processing component.

That also means that these constraints, such as the layouts, are directly determining a target quantity of computational resources (e.g., virtual cores or amount of primary memory) that are required to be consumed in parallel when the target number of component instances are to be executed. In other words, each of these component instances will consume computational resources, so that the target quantity of computational resources needed for a data processing component with a particular layout is directly determined by or correlated with the corresponding target number of component instances for that component. The term "target quantities of computational resources", as used throughout this application, for a particular program portion, such as a particular data processing component, may be equal to the product of the target number of instances of the program portion times the quantity of computational resources needed by each of the instances of the program portion.

Very generally, if one of the data processing components described throughout this application has a static layout type then this data processing component has a predefined, fixed target number of component instances 239 that are required to execute on the execution module 112 for the data processing graph 224 to successfully run (e.g. execute all associated data processing tasks without failure). The data processing component with a static layout type is also required to execute its component instances 239 on a predefined set of one or more hosts 236, 238, 240 of the execution module 112.

A potential advantage of the static layout type is locality of the computation. Locality refers to the ability to locate certain computational resources for the data processing component (e.g., a core of a host on which an instance will execute) on the same host as other computational resources (e.g., memory of the host in which data for the instance is stored). A dynamic layout type (FDL or VDL) may assign an instance to execute on a different host from the host that stores data to be operated on by that instance, which may provide increased flexibility, but only by trading off reduced locality. Though, if locality is not critical to a particular computation, this trade-off may be worthwhile.

If one of the data processing components described throughout this application has an FDL type then this data processing component has a predefined, fixed target number of component instances 239 that are required to execute on the execution module 112 for the data processing graph 224 to successfully run (e.g. execute all associated data processing tasks without failure). There is no restriction as to where (i.e., on which hosts 236, 238, 240 of the execution module 112) the component instances of the data processing component with the FDL type execute.

If one of the data processing components described throughout this application has a VDL type then this data processing component has a dynamically determined target number of component instances 239 (which may be determined at runtime), where execution of at least one component instance on the execution module 112 is required for the data processing graph 224 to successfully run (e.g. execute all associated data processing tasks without failure). There is no restriction as to where (i.e., on which hosts 236, 238, 240 of the execution module 112) the component instances of the data processing component with the VDL type execute.

A potential advantage of the dynamic layout type (FDL or VDL) is the flexibility of a computation being able to start even if there are no computational resources available on a particular (e.g., local) host 236, 238, 240, as long as there are computational resources available on some host 236, 238, 240 in a cluster. Another potential advantage is, if a computation fails due to failure of one or more hosts 236, 238, 240, the computation may be able to restart on a different set of hosts 236, 238, 240.

A potential advantage of the VDL type over the FDL type is, even if there is not as high a quantity of computational resources as desired, the computation is still able to start. A potential advantage of the FDL type over the VDL type is the ability to fix the degree of parallelism (i.e., number of component instances) in order to limit the startup time delay that would be incurred by waiting for requests for a larger degree of parallelism to be fulfilled.

In the exemplary data processing graph 224, 225 of FIGs. 2A and 2B, the exemplary first component 226 has a static layout type and is required to execute two component instances 239 (executed in the same or different computational resource units 237) on the first host 236 of the execution module 112. The second component 228 exemplary has an FDL type and is required to run three component instances 239 on the execution module 112 with no restriction as to where (i.e., on which hosts 236, 238, 240 of the execution module 112) the component instances are run. The third component 230, the fourth component 232, and the fifth component 234 all exemplary have VDL types and therefore are only required to execute a single component instance on the execution module 112 for the data processing graph to execute, though additional component instances may be executed if sufficient computational resources are available on the execution module 112. There is no restriction as to where (i.e., on which hosts 236, 238, 240 of the execution module 112) the component instances of the third component 230, the fourth component 232, and the fifth component 234 execute.

Each of the data processing components 226, 228, 230, 232, 234 in the data processing graph 224, 225 is configured to process data from the data source 102, such as data elements (e.g., blocks, files, or records) from datasets in the data source 102. In some examples, a block is a portion of data in a file that includes one or more records. In FIG. 2A, the first component 226 processes first data elements 252 from a first dataset 242, the second component, C2 228 processes second data elements 254 from a second dataset 244, the third component, C3 230 processes third data elements 256 from a third dataset 246, the fourth component, C4 232 processes fourth data elements 258 from a fourth dataset 248, and the fifth component, C5 234 processes fifth data elements 260 from a fifth dataset 250. In an example described below, a portion of the system 100 (e.g., the resource requesting module 122) analyzes the

datasets associated with each component to determine a target number of instances for different components, and consequently a target quantity of computational resources, based on the number of data elements. But, in other examples, the target quantity of computational resources is not solely based on a quantity of data in an associated dataset, but may instead (or also) depend on other factors, such as explicit or implicit user requirements, historical or estimated performance data, or combinations thereof. It is noted that there is no requirement that each data processing component 226, 228, 230, 232, 234 is associated with a different dataset. For example, a number of data processing components 226, 228, 230, 232, 234 may all process data from one or more of the same dataset(s).

In other words and in summary of the computing system 100 described above in context of FIGS. 1 and 2A, a computing system 100 comprises: a data source 102 that includes one or more sources of data; an execution environment 104 that includes an execution module 112, a resource manager 120, and a resource requesting module 122, wherein the execution environment 104 is hosted on one or more computers, wherein the execution module 112 is configured to process data from the data source 102 according to one or more computer programs 114, such as one or more data processing graphs 224, using computational resources of the execution environment 104 allocated by the resource manager 120 to the one or more computer programs 114, to generate output data, wherein the computer program 114 includes a plurality of (e.g. interrelated or interdependent) program portions, such as a plurality of (e.g. interrelated or interdependent) data processing components 226, 228, 230, 232, 234 of the data processing graph 224, which implement data processing tasks performed on data flowing from the data source 102 through the plurality of program portions to generate the output data, a data storage 116 that is accessible to the execution environment 104, wherein the computer program 114 and its plurality of program portions are specified by programming code and/or data structures stored in the data storage 116, wherein the plurality of program portions are connected by one or more data flow connections for data flow, such as links 226a, 228a, 228b, 230a, 230b, between the program portions, the data flow connections being specified by the programming code and/or the data structures, wherein the execution module 112 is configured to read the stored programming code and/or data structures, wherein the resource manager 120 is configured to receive requests for computational resources from the resource requesting module 122 and to either grant or deny the received requests based on an amount of computational resources available in the execution environment 104, and optionally wherein the resource manager 120 is further configured to schedule and monitor execution of the one or more computer programs 114 by the execution module 112, and wherein the resource manager 120 is further configured to allocate the computational resources of the execution environment, which are associated with the requested and granted requests, to the plurality of program portions and the resource requesting module 122 and the resource manager 120 are configured to interact with each other such that any one of the methods described in this application is executed, for example, such that each program portion of the plurality of program portions has an instance of the program portion that is executed on a portion of the data from the data source 102 without execution failure to generate the output data, such that all data processing tasks implemented by the plurality of program portions are executed on the data from the data source 102 without execution failure to generated the output data, or such that a given amount of data from the data source 102 to be processed by the computer program is fully processed (e.g., without execution failure) by the computer program to generated the output data.

A "component instance" of a data processing component, or more generally an "instance" of a program portion, as used herein throughout this application is an executable copy of the data processing component, or program portion, currently consuming computational resources, such as being in a portion of the primary memory.

**1 Resource Allocation**

Given the layout constraints associated with the components in the data processing graph 224, the exemplary data processing graph 224 can only successfully run or run at all if two component instances of the first data processing component 226 are executed on the first host 236 of the execution module 112, three component instances of the second data processing component 228 are executed on the execution module 112, and at least one component instance of each of the third data processing component 230, the fourth data processing component 232, and the fifth data processing component 234 are executed on the execution module 112. A successful run of the data processing graph may be characterized in that all component instances are executed on the data from the data source 102 without execution failure to generate the output data.

If the resource requesting module 122 has knowledge of the computational resources required by a total number of component instances of the data processing components of the data processing graph 224 and the computational resources available in the execution module 112, then the task of allocating the computational resources for the data processing graph 224 via the resource manager 120 could be performed using a solution to a packing optimization problem.

However, it is generally not the case that resource requesting module 122 has knowledge of the computational resources available in the execution module 112. Instead, the resource requesting module 122 requests computational resources from the resource manager 120 and waits to see if the requested computational resources are granted. Due to the lack of knowledge of the computational resources available in the execution module 112, there is a potential that the resource requesting module 122 will over-allocate the resource requirements of certain VDL type data processing components of the data processing graph 224 and in doing so, exhaust the computational resources available in the execution module 112 before any computational resources are allocated to other VDL type data processing components of the data processing graph 224 (i.e., starvation), or waste computational resources of over-allocated data processing components by creating a bottleneck with under-allocated data processing components (i.e., unbalanced execution).

1.1 Computational Resource Starvation

For example, in one approach to allocating computational resources for the data processing graph 224, the resource requesting module 122 first requests the computing resources required for the first, static layout type component 226 and the second, FDL type component 228. In this example, the resource manager 120 is able to allocate the required computational resources for the first component 226 and the second component 228.

The resource requesting module 122 then requests computational resources for executing the target number of instances (4 instances) of the third, VDL type component 230 on the execution module 112 (rather than only requesting enough computational resources to execute the required, single instance of the third component 230 on the execution module 112). The resource manager 120 is able to allocate the requested computational resources for the 4 instances of the third component 230. Next, the resource requesting module 122 requests the computational resources required to execute a single instance of the fourth component 232. In this example, the resource manager 120 indicates that there are insufficient resources for allocating the computational resources required to execute a single instance of the fourth component 232 on the execution module 112.

In the above example, by over-allocating the optional target computational resources for the third component 230, the resource requesting module 122 has essentially starved the fourth component 232 and the fifth component 234 of the data processing graph 224 of any computational resources. As a result, the fourth component 232 and the fifth component 234 are unable to execute even a single component instance on the execution module 112. Since the data processing graph 224 requires execution of at least one instance of all of its VDL type components on the computing system 112 to successfully run, the data processing graph is unable to successfully run. Whereas, if the third component 230 were only allocated computational resources for a single instance, there would have been enough for a single instance of each of the fourth component 232 and fifth component 234. In this sense, the third component 230 was over-allocated computational resources.

1.2 Computational Resource Requesting Algorithm

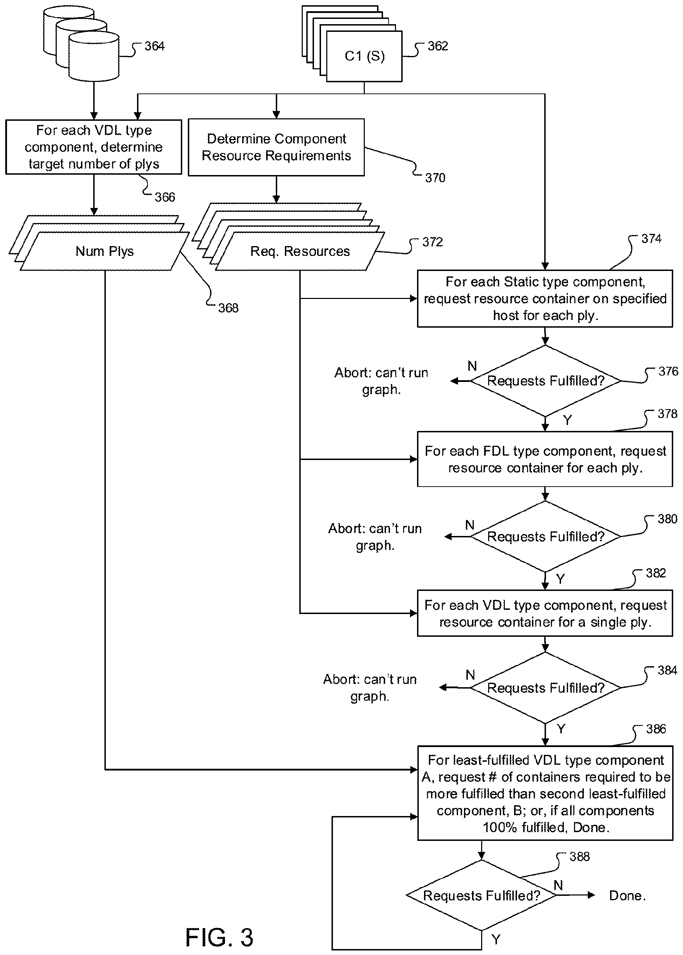

Referring to FIG. 3, a resource requesting algorithm is implemented by the computing system 100, such as by the resource requesting module 122, and is described below for the data processing graph as an example of the computer program and for the data processing components as examples of the program portions. The algorithm avoids the above-described starvation of data processing components, and fairly and properly allocates computational resources to VDL type components in a balanced manner. The algorithm accepts the data processing components 362 of the data processing graph 224 and the datasets 364 from the data source 102 as input and processes the input to allocate computational resources to the data processing components 362 for processing data from the datasets 364, including fairly and properly allocating computational resources to VDL type components 230, 232, 234 and avoiding starving VDL type components 230, 232, 234 of computational resources. One or more pre-processing steps before a first step 370 may optionally be included in the algorithm and may comprise identifying (e.g., based on metadata associated with each of the data processing components) any static, FDL and VDL data processing components in the accepted data processing components 362 of the data processing graph 224.

In the first step 370, each of the data processing components 362 is analyzed to determine an amount of computational resources 372 required to execute a component instance of the data processing component on the execution module 112. That is, each of the data processing components 362 is analyzed to determine the amount of computational resources 372 required by the programming code and/or the data structures defining the data processing component for (full) execution of one component instance 239 of the data processing component. For each static layout type data processing component and each FDL type data processing component, the target number of component instances to be executed or executable during execution of the data processing component may be determined which yields the target quantity of computational resources required for execution of each of these data processing components. In a second step 366, for each VDL type data processing component (e.g., data processing components 230, 232, 234 in FIGS. 2A, 2B), the amount of data or number of data items of the dataset(s) associated with or to be processed by the data processing component is used to determine a target number of component instances 239, 368 (sometimes referred to as 'plys') associated with or required by the data processing component, the target number of component instances to be executed or executable during execution of the data processing component may be determined, which yields the target quantity of computational resources required for execution of each of these data processing components. In some examples, the target number of instances 368 is the same as the number of data items of the datasets(s) associated with the component.

In a third step 374, for each required component instance of each static layout type component 226 among the data processing components 362, the resource requesting module 122 requests a 'container' including the required computational resources from the required host(s) H1-H3 for the component instance from the resource manager 120. If the requests are successful or fulfilled, the resource manager 120 responds to each of the requests with a container including the required computational resources. At a fourth step 376, if any of the requests sent to the resource manager 120 in the third step 374 are not fulfilled (e.g., if the resource manager 120 does not respond within a predetermined time interval), the algorithm aborts because there are insufficient resources available in the execution module 112 for executing the data processing graph 224. That is, if any of the requests is not fulfilled, then the data processing graph cannot run. If all of the requests sent to the resource manager 120 in the third step 374 are fulfilled, the algorithm proceeds to a fifth step 378.

In the fifth step 378, for each required component instance of each FDL type component 228 among the data processing components 362, the resource requesting module 122 requests a container including the required computational resources for the component instance from the resource manager 120. As is noted above, FDL type components can execute using computational resources from any of the hosts of the execution module 112. In a sixth step 380, if any of the requests sent to the resource manager 120 in the fifth step 378 are not fulfilled, the algorithm aborts because there are insufficient computational resources available in the execution module 112 for executing the data processing graph 224. That is, if any of the requests is not fulfilled, then the data processing graph cannot run. If all of the requests sent to the resource manager 120 in the fifth step 378 are fulfilled, the algorithm proceeds to a seventh step 382.

In the seventh step 382, for each VDL type component 230, 232, 234 among the data processing components 362, the resource requesting module 122 requests a container including the required computational resources for a single component instance of the component from the resource manager 120. In an eighth step 384 if any of the requests sent to the resource manager 120 in the seventh step 382 are not fulfilled, the algorithm aborts because there are insufficient computational resources available in the execution module 112 for executing the data processing graph 224. If all of the requests sent to the resource manager 120 in the seventh step 382 are fulfilled, sufficient computational resources are allocated to ensure that the data processing graph 224 can execute. In particular, upon successful completion of the seventh step 382, the algorithm has ensured that the required computational resources for any static layout type components and any FDL type components are allocated, and that at least some computational resources are allocated to each of the VDL type components. The algorithm then proceeds to a ninth step 386.

In the ninth step 386, all of the VDL type components 230, 232, 234 among the data processing components 362 are ranked according to their fulfillment ratio, where the term 'fulfillment ratio' is a percentage of the respective component's target quantity of computational resources that have been allocated to the respective component. In particular, the fulfillment ratio is the quantity of previously requested (and assumed granted) computational resources '# granted' divided by its associated target quantity of computational resources '# target'. For example, if a VDL type component has a target set to run ten component instances of itself, and has had two component instances previously requested (and granted), that component is twenty percent fulfilled, i.e. has a fulfillment ratio of twenty percent. Note that, in this example, each instance of a particular component is assumed to require the same quantity of computational resources (specified as a number of containers), but in other examples, different instances of the same component may require different quantities of computational resources. The number of containers granted then determines the number of component instances that can be executed at runtime.

Once the VDL type components are ranked according to their fulfillment ratios, the least-fulfilled VDL type component (referred to as component A) and the second least-fulfilled component (referred to as component B) are identified. For a tie in identifying the least-fulfilled component, the following can be performed for each of the least-fulfilled components. A tie in identifying the second least-fulfilled component does not matter, since only its fulfillment ratio will be used. For the least-fulfilled component, the resource requesting module 122 requests one or more containers for a number, N, of containers for the least-fulfilled component that, if granted, that 'partial request' would result in the least-fulfilled component being more fulfilled than the second least-fulfilled component. In some examples, N is determined according to the following equation:

$$N = \left\lfloor \left( \frac{\#\ \text{granted to B}}{\#\ \text{target for B}} - \frac{\#\ \text{granted to A}}{\#\ \text{target for A}} \right) * \left( \#\ \text{target for A} \right) + 1 \right\rfloor$$

If a tie occurs because all components are completely fulfilled (i.e., fulfillment ratio of 1), then the algorithm is complete.

In a tenth step 388, if any of the containers requested by the resource manager 120 in the ninth step 386 are not fulfilled, the algorithm is complete. If all of the containers requested by the resource manager 120 in the ninth step 386 are fulfilled, the algorithm loops back to the ninth step 386. The ninth step 386 and the tenth step 388 repeatedly run until all of the data processing components 362 are completely fulfilled, i.e. have a fulfillment ratio of 100%, or a request for containers for any of the VDL type components is not fulfilled.

In other exemplary implementations, some of the steps of the resource requesting algorithm can be performed in a different order or some steps can be eliminated. For example, requests of steps 374, 378, and 382 can be performed in a different order, or combined into a single request.

In some exemplary implementations, the algorithm above formulates all of the requests for containers before any of the requests are submitted to the resource manager 120. Once formulated all of the requests are submitted together, e.g. all at once, and are processed in order by the resource manager 120, according to the order in which the requests would have been submitted using the above algorithm. For example, the requests may be associated with priorities or include priority tags specifying the priorities (e.g. metadata specifying a primary priority, a secondary priority and a tertiary priority etc.), which cause that the requests are to be assessed for grant by the resource manager 120 in the order given by the priorities. In other words, the priorities may define an assessment constraint, to be accessed and used by the resource manager 120, defining the order according to which the requests are to be assessed for grant by the resource manager 120, wherein according to the assessment constraint the requests only become assessed for grant by the resource manager 120 if all higher prioritized and/or previously submitted one or more requests of the requests were granted by the computational resource manager. For example, the resource manager 120 may first access the priority tags included in all received requests. Then, the resource manager 120 may identify an order of these requests according to the priorities given by the priority tags. Then, the resource manager 120 may, request by request according to the identified order, determine for a currently considered request if all higher prioritized and/or previously submitted requests (if any) were granted by the resource manager 120 and only if so (otherwise the currently considered request is not even assessed for a grant of computational resources), assess whether computational resources are still available for allocation to the program portion associated with the currently considered request in the order. If such computational resources are still available, then this currently considered request becomes granted. However, if for the currently considered request it was assessed that no sufficient computational resources are available for allocation to the program portion associated with the currently considered request in the order, then the currently considered request is not granted (i.e. is denied). Each program portion is associated with a current fulfillment ratio, which is a degree of the respective program portion's determined target quantity of computational resources that has been or is so far deemed allocated to the respective program portion by a computational resource manager module, wherein the fulfillment ratio may be updated every time an additional computational resource has been or is deemed allocated to the respective program portion (e.g. by the grant of the associated request by the resource manager 120).

1.3 Example

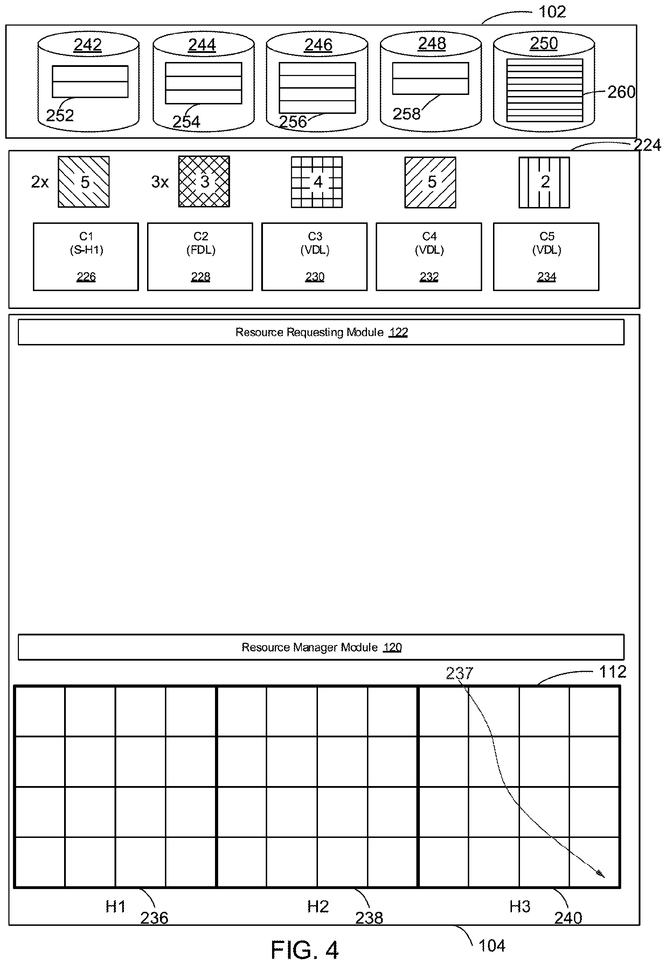

Referring to FIGs. 4-14, the algorithm of FIG. 3 is applied to the system 100 of FIG. 1 or 2 in preparation for executing the data processing graph 224. Referring to FIG. 4, in the first step 370 of the algorithm, the resource requesting module 122 analyzes the data processing components of the data processing graph 224 to determine the computational resource requirements for each of the data processing components. As a result of the first step 370, the resource requesting module 122 determines that the each component instance of the first data processing component 226 requires five units 237 of computational resources, each component instance of the second data processing component 228 requires three units 237 of computational resources, each component instance of the third data processing component 230 requires four units of computational resources, each component instance of the fourth data processing component 232 requires five units 237 of computational resources, and each component instance of the fifth data processing component 234 requires two units 237 of computational resources.

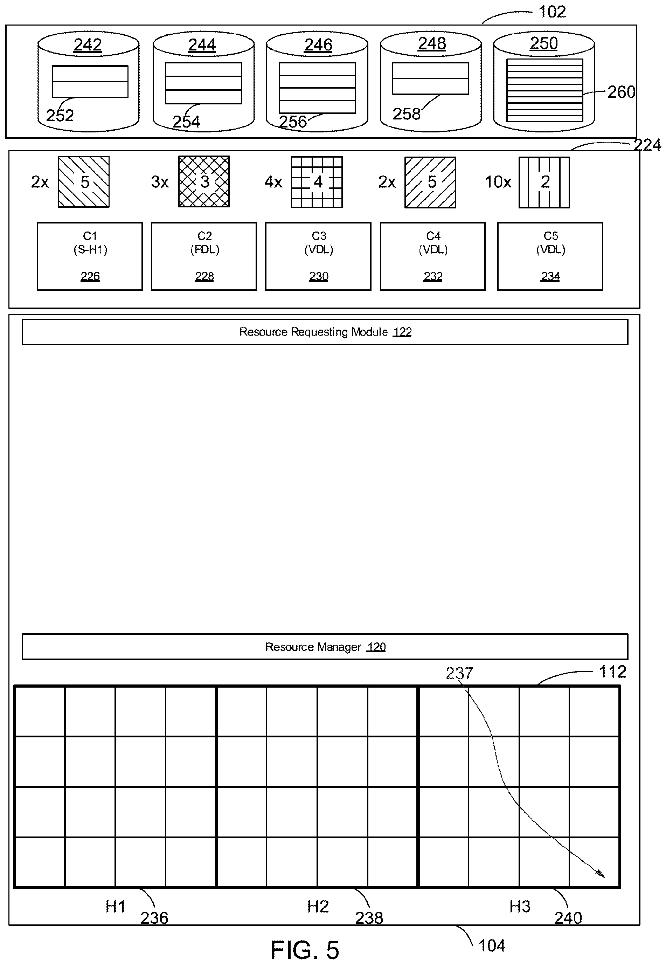

Referring to FIG. 5, in the second step 366 of the algorithm, the resource requesting module 122 analyzes the datasets 246, 248, 250 associated with each VDL type component to determine a target number of instances for the component. In some examples, the number of data items included in a dataset associated with a component determines the target number of instances for the component. In FIG. 5, the third dataset 246 associated with the third component 230 includes four data items 256. The resource requesting module 122 therefore determines that the target number of component instances for the third component 230 is equal to four. The fourth dataset 248 associated with the fourth component 232 includes two data items 258. The resource requesting module 122 therefore determines that the target number of component instances for the fourth component 232 is equal to two. The fifth dataset 250 associated with the fourth component 234 includes ten data items 260. The resource requesting module 122 therefore determines that the target number of component instances for the fifth component 234 is equal to ten.

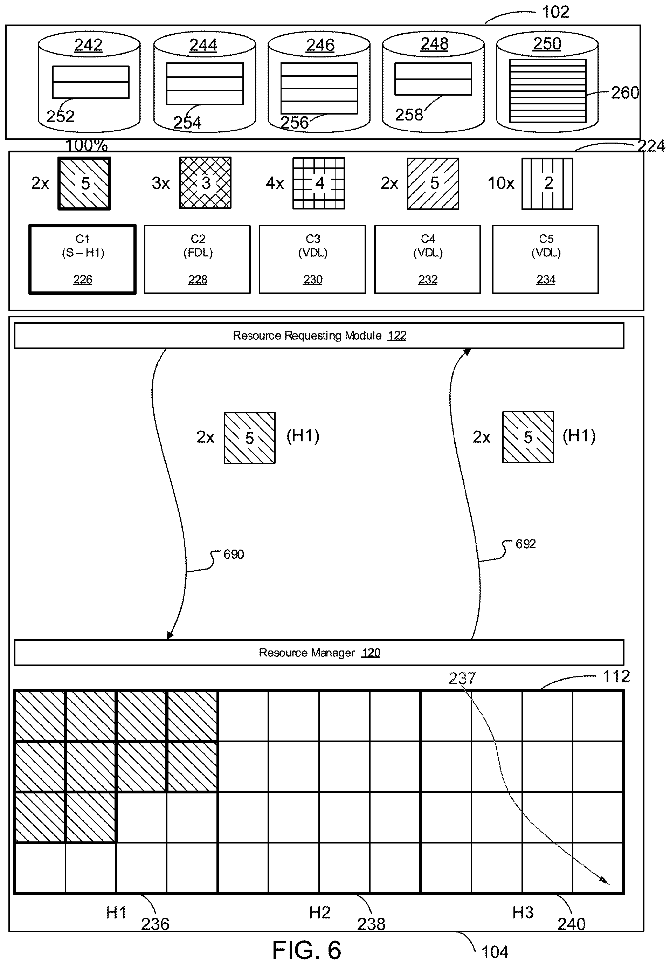

Referring to FIG. 6, in the third step 374 of the algorithm, the resource requesting module 122 interacts with the resource manager 120 to allocate computational resources for the first, static layout type component 226. To do so, the resource requesting module 122 sends a request 690 to the resource manager 120 for two containers (i.e., one for each required component instance of the component) from the first host 236, each with a size of five computational resource units 237. In FIG. 6, the resource manager 120 allocates ten computational resource units 237 on the first host 236 and responds with a message 692 indicating that it was able to allocate the requested computational resources and the request 690 is therefore fulfilled. With two containers, each including five computational resource units allocated for the first component 226, the first component 226 is 100% fulfilled, as is required for the data processing graph 224 to execute. The fourth step 376 of the algorithm determines that the request 690 was fulfilled and therefore causes the algorithm to proceed to the fifth step 378 of the algorithm.

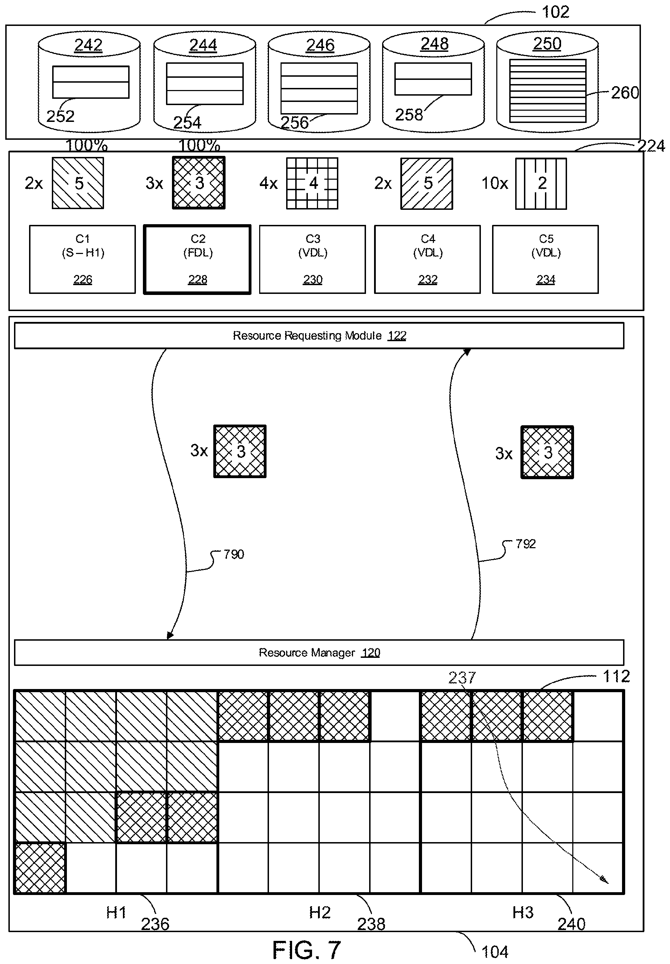

Referring to FIG. 7, in the fifth step 378 of the algorithm, the resource requesting module 122 interacts with the resource manager 120 to allocate computational resources for the second, FDL type component 228. To do so, the resource requesting module 122 sends a request 790 to the resource manager 120 for three containers (i.e., one for each required component instance of the component) from any of the hosts 236, 238, 240, each with a size of three computational resource units. In FIG. 7, the resource manager 120 allocates three computational resource units 237 on the first host 236, three computational resource units on the second host 238, and three computational resource units on the third host 240. The resource manager 120 then responds with a message 792 indicating that it was able to allocate the requested computational resources and the request 790 is therefore fulfilled. With three containers, each including three computational resource units 237 allocated for the second component 228, the second component 228 is 100% fulfilled, as is required for the data processing graph 224 to execute. The sixth step 380 of the algorithm determines that the request 790 was fulfilled and therefore causes the algorithm to proceed to the seventh step 382 of the algorithm.

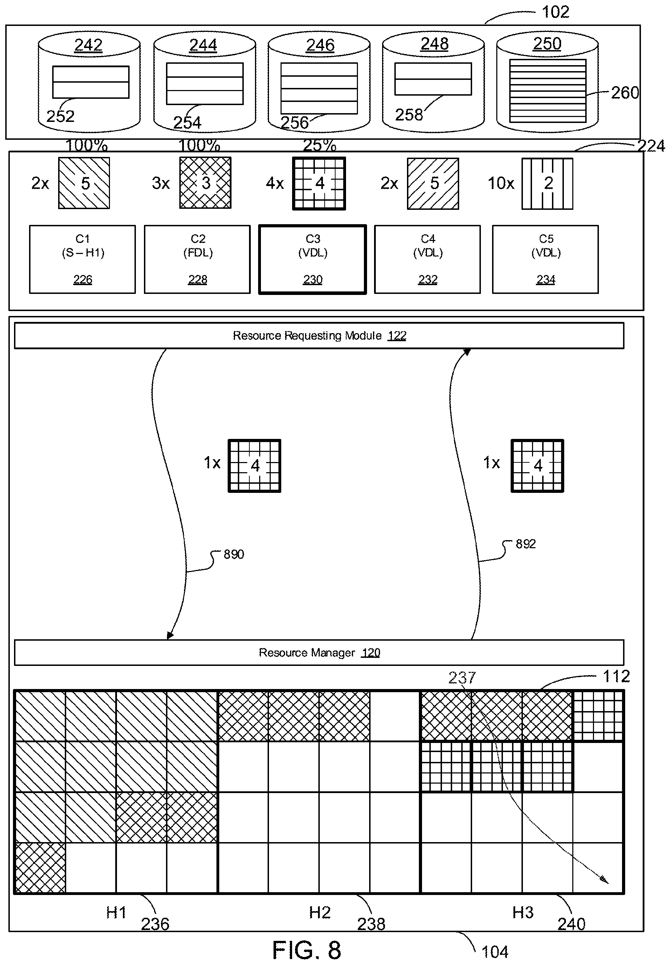

Referring to FIGs. 8-10, in the seventh step 382 of the algorithm, the resource requesting module 122 interacts with the resource manager 120 to allocate resources for a single component instance of each of the third VDL type component 230, the fourth VDL type component 232, and the fifth VDL type component 234.

In FIG. 8, the resource requesting module 122 requests allocation of computational resources for a single component instance of the third VDL type component 230 by sending a request 890 to the resource manager 120 for a single container with a size of four computational resource units 237. The resource manager 120 allocates four computational resource units 237 on the third host 240 and then responds with a message 892 indicating that it was able to allocate the requested computational resources and the request 890 is therefore fulfilled. With one container including four computational resource units allocated (out of a target number of four containers) for the third component 230, the third component 230 is 25% fulfilled.

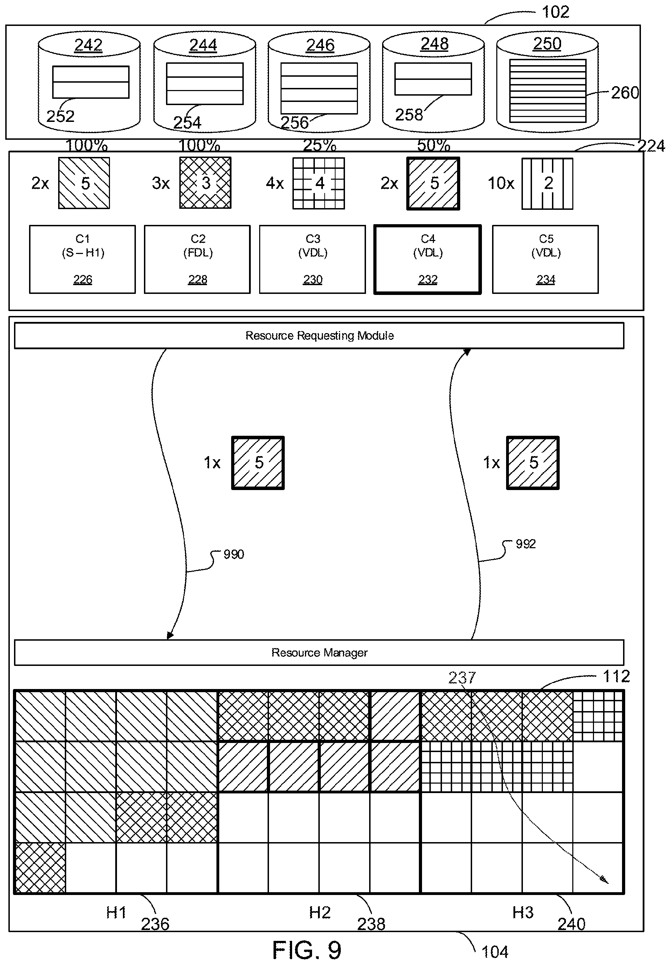

In FIG. 9, the resource requesting module 122 requests allocation of computational resources for a single component instance of the fourth, VDL type component 232 by sending a request 990 to the resource manager 120 for a single container with a size of five computational resource units 237. The resource manager 120 allocates five computational resource units 237 on the second host 238 and then responds with a message 992 indicating that it was able to allocate the requested computational resources and the request 990 is therefore fulfilled. With one container including five computational resource units allocated (out of a target number of two containers) for the fourth component 232, the fourth component 232 is 50% fulfilled.

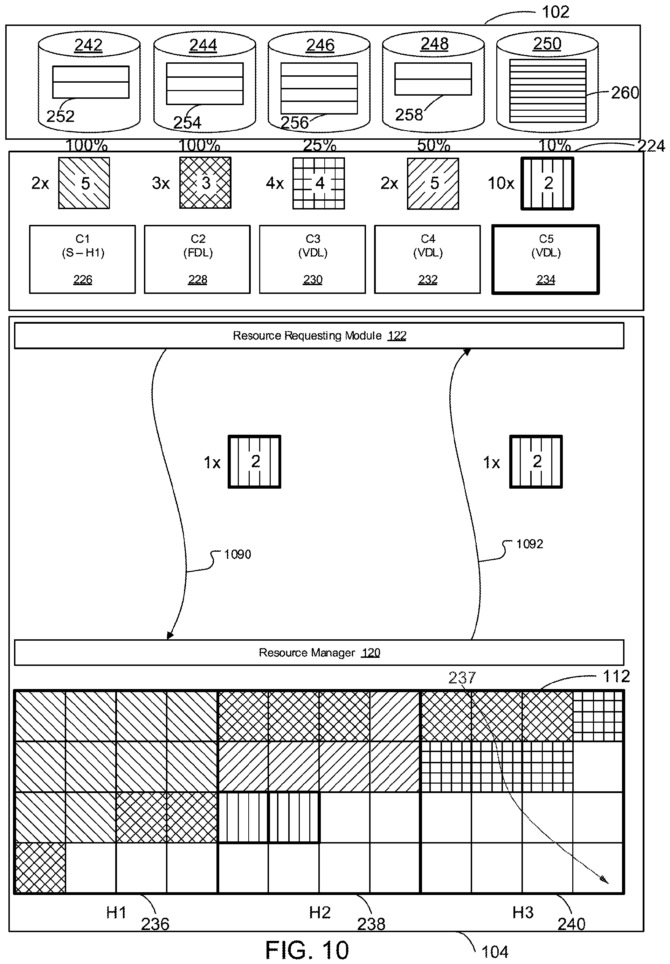

In FIG. 10, the resource requesting module 122 requests allocation of computational resources for a single component instance of the fifth VDL type component 234 by sending a request 1090 to the resource manager 120 for a single container with a size of two computational resource units 237. The resource manager 120 allocates two computational resource units 227 on the second host, 238 and then responds with a message 1092 indicating that it was able to allocate the requested computational resources and the request 1090 is therefore fulfilled. With one container including two computational resource units allocated (out of a target number of ten containers) for the fifth component 234, the fifth component 234 is 10% fulfilled.

The eighth step 384 of the algorithm determines that computational resources were successfully allocated for a single component instance of each of the VDL type components 230, 232, 234 and therefore causes the algorithm to proceed to the ninth step 386 of the algorithm.

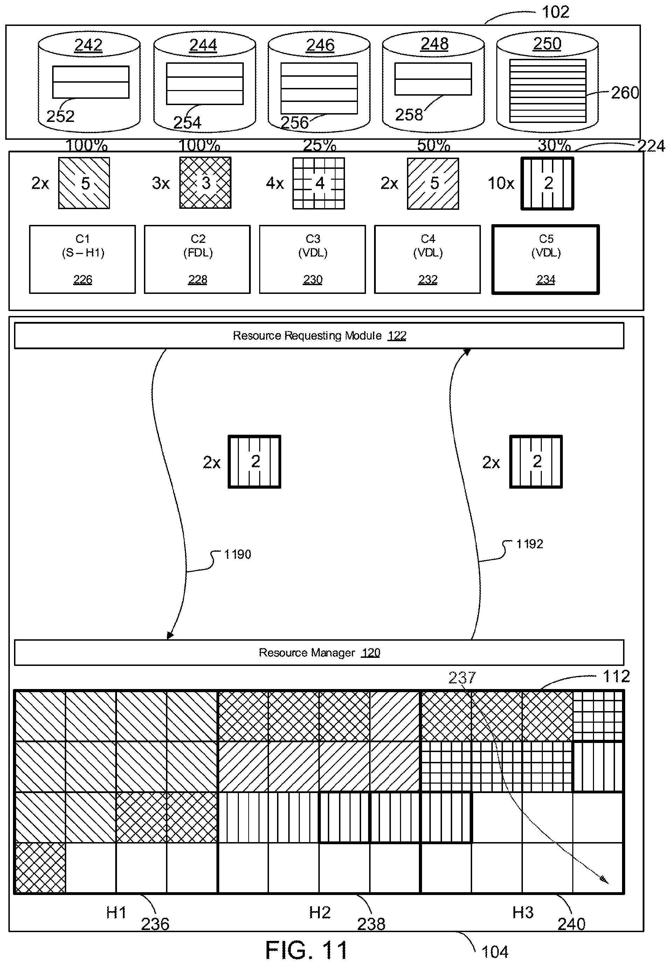

Upon completion of the seventh step and eighth steps 382, 384 sufficient computational resources are allocated to the data processing components of the data processing graph 224 to ensure that each data processing component has at least one component instance that can be executed so that the data processing graph 224 can execute on the execution module 104. The ninth and tenth steps 386, 388 of the algorithm are then repeatedly run to fairly and properly distribute the remaining computational resources to the third, fourth, and fifth components 230, 232, 234, as is illustrated in FIGs. 11-14.

Referring to FIG. 11, in the ninth step 386 of the algorithm, the resource requesting module 122 determines that the fifth component 234 is the least-fulfilled component (at 10% fulfillment ratio) and that the third component 230 is the second least-fulfilled component (at 25% fulfillment ratio). The resource requesting module 122 then determines that the number, N of instances of the fifth component 234 that, if granted, would result in the fifth component 234 being more fulfilled than the third component 230 is:

$$N = \left\lfloor \left( \frac{1}{4} - \frac{1}{10} \right) * (10) + 1 \right\rfloor = 2$$

The resource requesting module 122 then sends a request 1190 to the resource manager 120 for two the containers from any of the hosts, each with a size of two computational resource units. In FIG. 11, the resource manager 120 allocates two computational resource units on the second host 238 and two computational resource units on the third host 240. The resource manager 120 then responds with a message 1192 indicating that it was able to allocate the requested computational resources and the request 1190 is therefore fulfilled. With three containers, each including two computational resource units allocated for the fifth component 234, the fifth component 234 is 30% fulfilled. The tenth step 388 determines that all of the containers requested by the resource manager 120 in the ninth step 386 are fulfilled, and the algorithm therefore loops back to the ninth step 386.

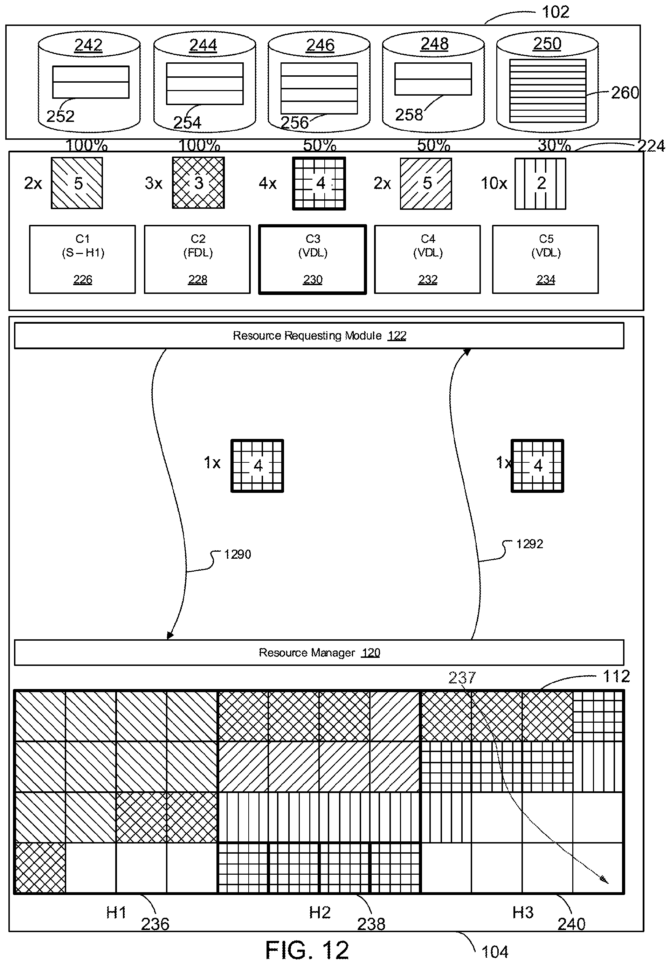

Referring to FIG. 12, in a second iteration of the ninth step 386 of the algorithm, the resource requesting module 122 determines that the third component 230 is the least-fulfilled component (at 25% fulfillment ratio) and that the fifth component 234 is the second least-fulfilled component (at 30% fulfillment ratio). The resource requesting module 122 then determines that the number, N of instances of the third component 230 that, if granted, would result in the third component 230 being more fulfilled than the fifth component 234 is:

$$N = \left\lfloor \left( \frac{3}{10} - \frac{1}{4} \right) * (4) + 1 \right\rfloor = 1$$

The resource requesting module 122 then sends a request 1290 to the resource manager 120 for one container from any of the hosts with a size of four computational resource units. In FIG. 12, the resource manager 120 allocates four computational resource units on the second host 238. The resource manager 120 then responds with a message 1292 indicating that it was able to allocate the requested computational resources and the request 1290 is therefore fulfilled. With a single container including four computational resource units allocated for the third component 230, the third component 230 is 50% fulfilled. The tenth step 388 determines that all of the containers requested by the resource manager 120 in the ninth step 386 are fulfilled, and the algorithm therefore loops back to the ninth step 386.

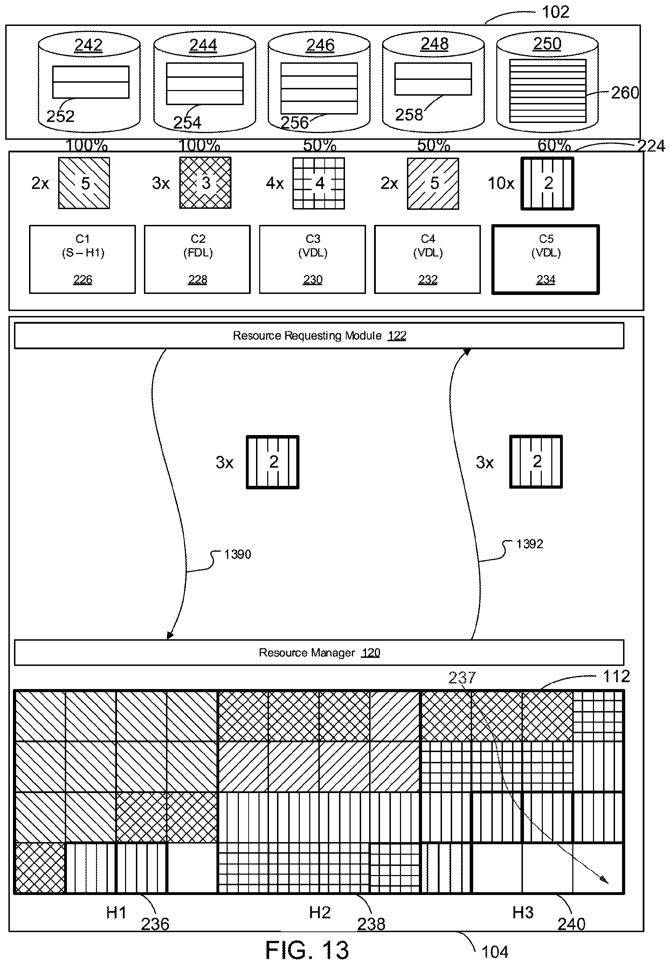

Referring to FIG. 13, in a third iteration of the ninth step 386 of the algorithm, the resource requesting module 122 determines that the fifth component 234 is the least-fulfilled component (at 30% fulfillment ratio) and that the third component 230 (or the fourth component 232) is the second least-fulfilled component (at 50% fulfillment ratio). The resource requesting module 122 then determines that the number, N of instances of the fifth component 234 that, if granted, would result in the fifth component 234 being more fulfilled than the third component 230 is:

$$N = \left\lfloor \left( \frac{2}{4} - \frac{3}{10} \right) * (10) + 1 \right\rfloor = 3$$

The resource requesting module 122 then sends a request 1390 to the resource manager 120 for three containers from any of the hosts, each container with a size of two computational resource units. In FIG. 13, the resource manager 120 allocates two computational resource units on the first host 236, and four computational resource units on the third host 240. The resource manager 120 then responds with a message 1392 indicating that it was able to allocate the requested computational resources and the request 1390 is therefore fulfilled. With a three containers including two computational resource units allocated for the fifth component 234, the fifth component 234 is 60% fulfilled. The tenth step 388 determines that all of the containers requested by the resource manager 120 in the ninth step 386 are fulfilled, and the algorithm therefore loops back to the ninth step 386.

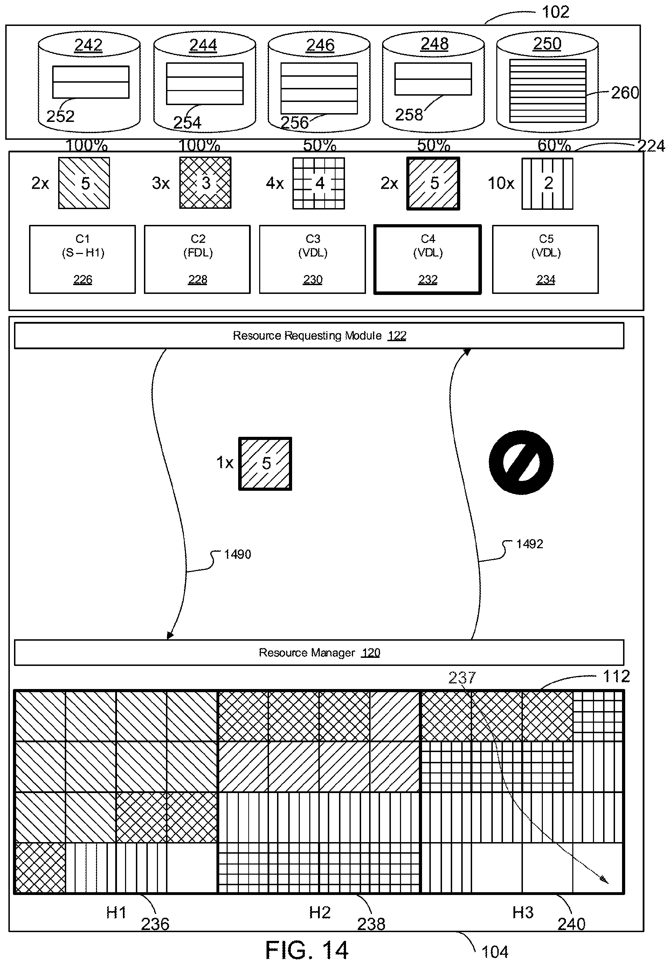

Referring to FIG. 14, in a fourth iteration of the ninth step 386 of the algorithm, the resource requesting module 122 determines that the fourth component 232 is the least-fulfilled component (at 50% fulfillment ratio) and that the third component 230 is the second least-fulfilled component (at 50% fulfillment ratio). The resource requesting module 122 then determines that the number, N, of component instances of the fourth component 232 that, if granted, would result in the fourth component 232 being more fulfilled than the third component 230 is:

$$N = \left\lfloor \left( \frac{2}{4} - \frac{1}{2} \right) * (2) + 1 \right\rfloor = 1$$

The resource requesting module 122 then sends a request 1490 to the resource manager 120 for one container from any of the hosts 236, 238, 240 with a size of five computational resource units 237. In FIG. 14, the resource manager 120 is unable to allocate five computational resource units 237 among the available computational resource units on any of the hosts and therefore responds with a message 1492 indicating that it was unable to allocate the requested computational resources. The tenth step 388 determines that all of the containers requested by the resource manager 120 in the ninth step 386 are not fulfilled, and the algorithm is therefore "done" and exits.

It is noted that, in some examples, since data processing components may have different computational resource requirements, the algorithm may not exit or complete upon the first failed request for resource allocation but may instead attempt to allocate additional resources for the other VDL type components until none of the data processing components is able to allocate any additional computation resources.

In some examples, each data processing component is associated with a different layout, but in other examples, there may be multiple (or even all) components that share the same layout. In those latter examples, the same techniques described herein can be used by summing resources required by the multiple components and requesting the resulting sum of resources for the multiple components to share.

2 Implementations

The computational resource allocation approaches described above are implemented, for example, using a programmable computing system executing suitable software instructions or they are implemented in suitable hardware such as a field-programmable gate array (FPGA) or in some hybrid form. For example, in a programmed approach the software may include procedures in one or more computer programs that execute on one or more programmed or programmable computing system (which may be of various architectures such as distributed, client/server, or grid) each including at least one processor, at least one data storage system (including volatile and/or non-volatile memory and/or storage elements), at least one user interface (for receiving input using at least one input device or port, and for providing output using at least one output device or port). The software may include one or more modules of a larger program, for example, that provides services related to the design, configuration, and execution of data processing graphs. The modules of the program (e.g., elements of a data processing graph) can be implemented as data structures or other organized data conforming to a data model stored in a data repository.

The software may be stored in non-transitory form, such as being embodied in a volatile or non-volatile storage medium, or any other non-transitory medium, using a physical property of the medium (e.g., surface pits and lands, magnetic domains, or electrical charge) for a period of time (e.g., the time between refresh periods of a dynamic memory device such as a dynamic RAM). In preparation for loading the instructions, the software may be provided on a tangible, non-transitory medium, such as a CD-ROM or other computer-readable medium (e.g., readable by a general or special purpose computing system or device), or may be delivered (e.g., encoded in a propagated signal) over a communication medium of a network to a tangible, non-transitory medium of a computing system where it is executed. Some or all of the processing may be performed on a special purpose computer, or using special-purpose hardware, such as coprocessors or field-programmable gate arrays (FPGAs) or dedicated, application-specific integrated circuits (ASICs). The processing may be implemented in a distributed manner in which different parts of the computation specified by the software are performed by different computing elements. Each such computer program is preferably stored on or downloaded to a computer-readable storage medium (e.g., solid state memory or media, or magnetic or optical media) of a storage device accessible by a general or special purpose programmable computer, for configuring and operating the computer when the storage device medium is read by the computer to perform the processing described herein. The inventive system is also considered to be implemented as a tangible, non-transitory medium, configured with a computer program, where the medium so configured causes a computer to operate in a specific and predefined manner to perform one or more of the processing steps described herein.

Nevertheless, it is to be understood that the foregoing description is intended to illustrate and not to limit the scope of the invention, which is defined by the scope of the following claims. Accordingly, other embodiments are also within the scope of the following claims. For example, various modifications may be made without departing from the scope of the invention. Additionally, some of the steps described above may be order independent, and thus can be performed in an order different from that described.

**Claims**

1. A method for requesting, from a computational resource manager (120), computational resources (237) for executing a computer program (224), having a plurality of program portions, in a computing system (100), the method including:

   storing information specifying target quantities of computational resources (237) associated with respective ones of the program portions, where each program portion uses granted computational resources (237) granted by the computational resource manager (120) enabling that program portion to be executed in the computing system (100); and
   computing requests, the requests being for computational resources (237) for executing the computer program (224) in the computing system (100), for submission to the computational resource manager (120) as a plurality of sets of requests, where each set of requests, except for an initial set of requests, would become processed by the computational resource manager (120) only if the previously submitted one or more sets of the plurality of sets of requests were granted by the computational resource manager (120) for use by the plurality of program portions, the computing including:

      forming the initial set of requests, wherein the initial set of requests includes a minimum request for each program portion, where each minimum request requests a minimum quantity of computational resources (237) needed to execute the corresponding portion of the program, and
      forming one or more additional sets of requests for processing by the computational resource manager (120) after the initial set of requests,

      **characterized in that** each program portion of the plurality of program portions is associated with a respective fulfillment ratio of its quantity of previously requested computational resources (237) divided by its associated target quantity of computational resources (237),
      wherein the program portions of the plurality of program portions are ranked according to their fulfillment ratios, and
      wherein at least one set of requests of the additional sets of requests includes a request for one or more computational resource units (237) for at least one program portion of the plurality of program portions that is the least-fulfilled program portion of the ranked program portions, and wherein the request for one or more computational resource units (237) requests an additional quantity of one or more computational resource units (237) for the least-fulfilled program portion that increases the current fulfillment ratio for the least-fulfilled program portion to a value less than one but greater than the current fulfillment ratio for a program portion that is the second least-fulfilled program portion of the ranked program portions.

2. The method of claim 1, wherein a program portion is a member of the least-fulfilled set if its associated fulfillment ratio, over all of the plurality of program portions, is the minimum of the associated fulfillment ratios, and wherein the request for one or more computational resource units (237) requests a quantity of computational resource units (237) that is less than or equal to a quantity such that, after the request for one or more computational resource units (237) is granted, each program portion in the least-fulfilled set will have a fulfillment ratio that is still smaller than a fulfillment ratio of at least one program portion that is not a member of the least-fulfilled set.

3. The method of claim 2, wherein the request for one or more computational resource units (237) requests a quantity of computational resources (237) that is greater than or equal to a quantity such that, after the request for one or more computational resource units (237) is granted, each program portion in the least-fulfilled set will have a fulfillment ratio that is at least as large as a fulfillment ratio of at least one program portion that is not a member of the least-fulfilled set.

4. The method of claim 1, wherein a program portion is a member of the least-fulfilled set if its associated fulfillment ratio, over all of the plurality of program portions, is the minimum of the associated fulfillment ratios, and wherein the request for one or more computational resource units (237), and wherein the request for one or more computational resource units (237) requests a quantity of computational resources (237) that is greater than or equal to a quantity such that, after the request for one or more computational resource units (237) is granted, each program portion in the least-fulfilled set will have a fulfillment ratio that is at least as large as a fulfillment ratio of at least one program portion that is not a member of the least-fulfilled set.

5. The method of any previous claim, wherein the request for one or more computational resource units (237) requests the additional quantity, IN, of computational resource units (237) for the least-fulfilled program portion of the plurality of program portions according to $N = [(G_R/T_R - G_A/T_A) \times T_A] + 1$, wherein $G_R$ is a number of granted resources to the second least-fulfilled program portion, $T_R$ is a number of target resources for the second least-fulfilled program portion, $G_A$ is a number of granted resources to the least-fulfilled program portion, and $T_A$ is number of target resources for the least-fulfilled program portion.

6. The method of any previous claim, wherein at least one of the program portions is associated with a fixed target quantity of computational resources (237) and at least one of the program portions is associated with a variable target quantity of computational resources (237), and the minimum request for each program portion associated with a fixed target quantity of computational resources (237) is a full request corresponding to the complete target quantity of computational resources (237), and the minimum request for each program portion associated with a variable target quantity of computational resources (237) is an associated request for one or more computational resource units (237) corresponding to less than the complete target quantity of computational resources (237).

7. The method of claim 6, wherein the minimum request for each program portion associated with a variable target quantity of computational resources (237) is an associated request for one or more computational resource units (237) corresponding to a single unit of computational resources (237), where each variable target quantity of computational resources (237) is defined in terms of a granularity of computational resources (237) that divides the complete target quantity of computational resources (237) into a plurality of units of equal size.

8. The method of any previous claim, wherein at least some requests in at least one set of requests correspond to quantities of computational resources (237) of different sizes from each other.

9. The method of any previous claim, wherein storing the information specifying target quantities of computational resources (237) associated with respective ones of the plurality of program portions includes, for at least one program portion, determining its associated target quantity of computational resources (237) based at least in part on user input.

10. The method of any previous claim, wherein the computational resources (237) are distributed over a plurality of computing nodes.

11. The method of claim 10, wherein at least some of the program portions require that their granted computational resources (237) are obtained from a specific one or more computing nodes of the plurality of computing nodes.

12. The method of claim 10 or 11, wherein computational resources (237) associated with each request of each set of requests of the plurality of sets of requests must be obtained from a single computing node of the plurality of computing nodes.

13. The method of any previous claim, wherein at least some of the program portions are configured to process data items from one or more data sources and the method further includes determining the target quantities of computational resources (237) for each of the program portions based at least in part on the data items from the one or more data sources.

14. The method of claim 13, wherein determining the target quantities of computational resources (237) for each of the program portions based at least in part on the data items from the one or more data sources includes, for each program portion, adding computational resources (237) associated with a single instance of the program portion to the target quantity of computational resources (237) associated with the program portion for each data item to be processed by the program portion.

15. The method of any previous claim, wherein each request, of each set of requests of the plurality of sets of requests, requests computational resources (237) required by a single instance of a particular program portion of the plurality of program portions.

16. The method of any previous claim, wherein a first program portion of the plurality of program portions is associated with a plurality of requests from the plurality of sets of requests.

17. The method of any previous claim, further including receiving, in response to the initial set of requests, an indication that one or more requests of the initial set of requests was not fulfilled and aborting execution of the program based on the response.

18. A computer-readable medium storing software for requesting, from a computational resource manager (120), computational resources (237) for executing a computer program (224), having a plurality of program portions, in a computing system (100), the software including instructions for causing a computing system (100) to perform the method of any of claims 1 to 17.

19. A computing system (100) for requesting, from a computational resource manager (120), computational resources (237) for executing a program, having a plurality of program portions, in the computing system (100), the computing system (100) including:

a data storage system storing information specifying target quantities of computational resources (237) associated with respective ones of the program portions; and
at least one processor configured to perform the method of any of claims 1 to 17.

**Patentansprüche**

1. Verfahren zum Anfordern, von einem Rechenressourcenmanager (120), von Rechenressourcen (237) zum Ausführen eines Computerprogramms (224), das eine Vielzahl von Programmanteilen aufweist, in einem Rechensystem (100), wobei das Verfahren Folgendes beinhaltet:

Speichern von Informationen, die Zielanzahlen von Rechenressourcen (237) spezifizieren, die mit jeweiligen der Programmanteile assoziiert sind, wobei jeder Programmanteil genehmigte Rechenressourcen (237) verwendet, die durch den Rechenressourcenmanager (120) genehmigt wurden, wodurch ermöglicht wird, dass dieser Programmanteil in dem Rechensystem (100) ausgeführt wird; und
Berechnen von Anforderungen, wobei die Anforderungen für Rechenressourcen (237) zum Ausführen des Computerprogramms (224) in dem Rechensystem (100) dienen, zum Einreichen bei dem Rechenressourcenmanager (120) als eine Vielzahl von Mengen von Anforderungen, wobei jede Menge von Anforderungen, ausgenommen eine Anfangsmenge von Anforderungen, nur dann durch den Rechenressourcenmanager (120) verarbeitet werden würde, wenn die eine zuvor eingereichte Menge oder die mehreren zuvor eingereichten Mengen von Anforderungen durch den Rechenressourcenmanager (120) zur Verwendung durch die Vielzahl von Programmanteilen genehmigt wurden, wobei das Berechnen Folgendes beinhaltet:

Ausbilden der Anfangsmenge von Anforderungen, wobei die Anfangsmenge von Anforderungen eine Minimalanforderung für jeden Programmanteil beinhaltet, wobei jede Minimalanforderung eine Minimalanzahl von zum Ausführen des entsprechenden Anteils des Programms benötigte Rechenressourcen (237) anfordert, und
Ausbilden einer oder mehrerer zusätzlicher Mengen von Anforderungen zum Verarbeiten durch den Rechenressourcenmanager (120), nach der Anfangsmenge von Anforderungen,
**dadurch gekennzeichnet, dass**
jeder Programmanteil der Vielzahl von Programmanteilen mit einem jeweiligen Erfüllungsverhältnis von dessen Anzahl von zuvor angeforderten Rechenressourcen (237) dividiert durch dessen assoziierte angeforderte Anzahl von Rechenressourcen (237) assoziiert ist,
wobei die Programmanteile der Vielzahl von Programmanteilen gemäß ihrer Erfüllungsverhältnisse eingestuft sind, und

wobei mindestens eine Menge von Anforderungen der zusätzlichen Mengen von Anforderungen eine Anforderung für eine oder mehrere Rechenressourceneinheiten (237) für mindestens einen Programmanteil der Vielzahl von Programmanteilen, der der am wenigsten erfüllte Programmanteil der eingestuften Programmanteile ist, beinhaltet, und wobei die Anforderung für eine oder mehrere Rechenressourceneinheiten (237) eine zusätzliche Anzahl von einer oder mehreren Rechenressourceneinheiten (237) für den am wenigsten erfüllten Programmanteil anfordert, der das aktuelle Erfüllungsverhältnis für den am wenigsten erfüllten Programmanteil auf einen Wert vergrößert, der kleiner als eins aber größer als das aktuelle Erfüllungsverhältnis für einen Programmanteil ist, der der am zweitwenigsten erfüllte Programmanteil der eingestuften Programmanteile ist.

2. Verfahren nach Anspruch 1, wobei ein Programmanteil ein Element der am wenigsten erfüllten Menge ist, wenn dessen assoziiertes Erfüllungsverhältnis über alle der Vielzahl von Programmanteilen hinweg das Minimum der assoziierten Erfüllungsverhältnisse ist, und wobei die Anforderung für eine oder mehrere Rechenressourceneinheiten (237) eine Anzahl von Rechenressourceneinheiten (237) anfordert, die kleiner oder gleich einer Anzahl ist, so dass, nachdem die Anforderung für eine oder mehrere Rechenressourceneinheiten (237) genehmigt wurde, jeder Programmanteil in der am wenigsten erfüllten Menge ein Erfüllungsverhältnis aufweisen wird, das weiterhin kleiner als ein Erfüllungsverhältnis mindestens eines Programmanteils ist, der kein Element der am wenigsten erfüllten Menge ist.

3. Verfahren nach Anspruch 2, wobei die Anforderung für eine oder mehrere Rechenressourceneinheiten (237) eine Anzahl von Rechenressourcen (237) anfordert, die größer oder gleich einer Anzahl ist, so dass, nachdem die Anforderung für eine oder mehrere Rechenressourceneinheiten (237) genehmigt wurde, jeder Programmanteil in der am wenigsten erfüllten Menge ein Erfüllungsverhältnis aufweisen wird, dass mindestens so groß wie ein Erfüllungsverhältnis des mindestens einen Programmanteils ist, der kein Element der am wenigsten erfüllten Menge ist.

4. Verfahren nach Anspruch 1, wobei ein Programmanteil ein Element der am wenigsten erfüllten Menge ist, wenn dessen assoziiertes Erfüllungsverhältnis, über alle der Vielzahl von Programmanteilen hinweg, das Minimum der assoziierten Erfüllungsverhältnisse ist, und wobei die Anforderung für eine oder mehrere Rechenressourceneinheiten (237), und wobei die Anforderung für eine oder mehrere Rechenressourceneinheiten (237) eine Anzahl von Rechenressourcen (237) anfordert, die größer als oder gleich einer Anzahl ist, so dass, nachdem die Anforderung für eine oder mehrere Rechenressourceneinheiten (237) genehmigt wurde, jeder Programmanteil in der am wenigsten erfüllten Menge ein Erfüllungsverhältnis aufweisen wird, dass mindestens so groß wie ein Erfüllungsverhältnis des mindestens einen Programmanteils ist, der kein Element der am wenigsten erfüllten Menge ist.

5. Verfahren nach einem der vorhergehenden Ansprüche, wobei die Anforderung für eine oder mehrere Rechenressourceneinheiten (237) die zusätzliche Anzahl, N, von Rechenressourceneinheiten (237) für den am wenigsten erfüllten Programmanteil der Vielzahl von Programmanteilen gemäß $N = \left[ \left( \frac{G_R}{T_R} - \frac{G_A}{T_A} \right) \times T_A \right] + 1$ anfordert, wobei $G_R$ eine Zahl von genehmigten Ressourcen für den am zweitwenigsten erfüllten Programmanteil ist, $T_R$ eine Zahl von Zielressourcen für den zweitwenigsten erfüllten Programmanteil ist, $G_A$ eine Zahl von genehmigten Ressourcen für den am wenigstens erfüllten Programmanteil ist und $T_A$ eine Zahl von Zielressourcen für den am wenigsten erfüllten Programmanteil ist.

6. Verfahren nach einem der vorhergehenden Ansprüche, wobei mindestens einer der Programmanteile mit einer festen Zielanzahl von Rechenressourcen (237) assoziiert ist, und mindestens einer der Programmanteile mit einer variablen Zielanzahl von Rechenressourcen (237) assoziiert ist, und die Minimalanforderung für jeden mit einer festen Zielanzahl von Rechenressourcen (237) assoziierten Programmanteil eine volle Anforderung ist, die der vollständigen Zielanzahl von Rechenressourcen (237) entspricht, und die Minimalanforderung für jeden mit einer variablen Zielanzahl von Rechenressourcen (237) assoziierten Programmanteil eine assoziierte Anforderung für eine oder mehrere Rechenressourceneinheiten (237) ist, die weniger der vollständigen Zielanzahl von Rechenressourcen (237) entspricht.

7. Verfahren nach Anspruch 6, wobei die Minimalanforderung für jeden mit einer variablen Zielanzahl von Rechenressourcen (237) assoziierten Programmanteil eine assoziierte Anforderung für eine oder mehrere Rechenressourceneinheiten (237) ist, die einer Einzeleinheit von Rechenressourcen (23) entsprechen, wobei jede variable Zielanzahl von Rechenressourcen (237) hinsichtlich einer Granularität von Rechenressourcen (237), die die vollständige Zielanzahl von Rechenressourcen (237) in eine Vielzahl von Einheiten von gleicher Größe aufteilt, definiert ist.

8. Verfahren nach einem der vorhergehenden Ansprüche, wobei mindestens einige Anforderungen in mindestens einer Menge von Anforderungen Anzahlen von Rechenressourcen (237) von untereinander verschiedenen Größen entsprechen.

9. Verfahren nach einem der vorhergehenden Ansprüche, wobei Speichern der Informationen, die die Zielanzahlen von mit jeweiligen aus der Vielzahl von Programmanteilen assoziierten Rechenressourcen (237) spezifizieren, beinhaltet, für mindestens einen Programmanteil, seine assoziierte Zielanzahl von Rechenressourcen (237) zumindest teilweise auf der Grundlage einer Benutzereingabe zu bestimmen.

10. Verfahren nach einem der vorhergehenden Ansprüche, wobei die Rechenressourcen (237) über eine Vielzahl von Rechenknoten verteilt sind.

11. Verfahren nach Anspruch 10, wobei zumindest einige der Programmanteile erfordern, dass deren genehmigte Rechenressourcen (237) von einem spezifischen oder mehreren spezifischen Rechenknoten der Vielzahl von Rechenknoten erhalten werden.

12. Verfahren nach Anspruch 10 oder 11, wobei mit jeder Anforderung von jeder Menge von Anforderungen der Vielzahl von Mengen von Anforderungen assoziierte Rechenressourcen (237) von einem einzigen Rechenknoten der Vielzahl von Rechenknoten erhalten werden müssen.

13. Verfahren nach einem der vorhergehenden Ansprüche, wobei mindestens einige der Programmanteile ausgelegt sind zum Verarbeiten von Datenposten von einer oder mehreren Datenquellen, und das Verfahren ferner Bestimmen der Zielanzahlen von Rechenressourcen (237) für jeden der Programmanteile zumindest teilweise auf der Grundlage der Datenposten von der einen oder den mehreren Datenquellen beinhaltet.

14. Verfahren nach Anspruch 13, wobei das Bestimmen der Zielanzahlen von Rechenressourcen (237) für jeden der Programmanteile zumindest teilweise auf der Grundlage der Datenposten von der einen oder den mehreren Datenquellen beinhaltet, für jeden Programmanteil, mit einer einzigen Instanz des Programmanteils assoziierter Rechenressourcen (237) zu der Zielanzahl von mit dem Programmanteil assoziierten Rechenressourcen (237) für jeden durch den Programmanteil zu verarbeitenden Datenposten hinzuzufügen.

15. Verfahren nach einem der vorhergehenden Ansprüche, wobei jede Anforderung, von jeder Menge von Anforderungen der Vielzahl von Mengen von Anforderungen, Rechenressourcen (237) anfordert, die durch eine einzige Instanz eines bestimmten Programmanteils aus der Vielzahl von Programmanteilen benötigt wird.

16. Verfahren nach einem der vorhergehenden Ansprüche, wobei ein erster Programmanteil aus der Vielzahl von Programmanteilen mit einer Vielzahl von Anforderungen aus der Vielzahl von Mengen von Anforderungen assoziiert ist.

17. Verfahren nach einem der vorhergehenden Ansprüche, ferner beinhaltend Empfangen, als Reaktion auf die Anfangsmenge von Anforderungen, einer Angabe, dass eine oder mehrere Anforderungen der Anfangsmenge von Anforderungen nicht erfüllt wurden, und Abbrechen der Ausführung des Programms auf der Grundlage der Reaktion.

18. Computerlesbares Medium, das Software speichert zum Anfordern, von einem Rechenressourcenmanager (120), von Rechenressourcen (237) zum Ausführen eines Computerprogramms (224), das eine Vielzahl von Programmanteilen aufweist, in einem Rechensystem (100), wobei die Software Anweisungen beinhaltet, ein Rechensystem (100) zum Durchführen des Verfahrens nach einem der Ansprüche 1 bis 17 zu veranlassen.

19. Rechensystem (100) zum Anfordern, von einem Rechenressourcenmanager (120), von Rechenressourcen (237) zum Ausführen eines Programms, das eine Vielzahl von Programmanteilen aufweist, in dem Rechensystem (100), wobei das Rechensystem (100) Folgendes beinhaltet:

ein Datenspeicherungssystem, das Informationen speichert, die Zielanzahlen von mit jeweiligen der Programmanteile assoziierten Rechenressourcen (237) spezifizieren; und
mindestens einen Prozessor, der ausgelegt ist zum Durchführen des Verfahrens nach einem der Ansprüche 1 bis 17.

**Revendications**

1. Procédé pour demander, à un gestionnaire de ressources de calcul (120), des ressources de calcul (237) pour exécuter un programme informatique (224), ayant une pluralité de portions de programme, dans un système informatique (100), le procédé incluant :

   le stockage d'informations spécifiant des quantités cibles de ressources de calcul (237) associées à des portions respectives des portions de programme, où chaque portion de programme utilise des ressources de calcul accordées (237) accordées par le gestionnaire de ressources de calcul (120) permettant à cette portion de programme d'être exécutée dans le système informatique (100) ; et
   le calcul de demandes, les demandes étant pour des ressources de calcul (237) pour exécuter le programme informatique (224) dans le système informatique (100), pour une soumission au gestionnaire de ressources de calcul (120) sous la forme d'une pluralité d'ensembles de demandes, où chaque ensemble de demandes, à l'exception d'un ensemble initial de demandes, deviendrait traité par le gestionnaire de ressources de calcul (120) seulement si l'ensemble ou les ensembles de la pluralité d'ensembles de demandes soumis précédemment ont été accordés par le gestionnaire de ressources de calcul (120) pour une utilisation par la pluralité de portions de programme, le calcul incluant :

   la formation de l'ensemble initial de demandes, l'ensemble initial de demandes incluant une demande minimale pour chaque portion de programme, où chaque demande minimale demande une quantité minimale de ressources de calcul (237) nécessaires pour exécuter la portion correspondante du programme, et
   la formation d'un ou de plusieurs ensembles supplémentaires de demandes à traiter par le gestionnaire de ressources de calcul (120) après l'ensemble initial de demandes,

   **caractérisé en ce que** chaque portion de programme de la pluralité de portions de programme est associée à un rapport de satisfaction respectif de sa quantité de ressources de calcul (237) précédemment demandées divisée par sa quantité cible associée de ressources de calcul (237), les portions de programme de la pluralité de portions de programme étant classées selon leurs rapports de satisfaction, et
   au moins un ensemble de demandes des ensembles supplémentaires de demandes incluant une demande d'une ou de plusieurs unités de ressources informatiques (237) pour au moins une portion de programme de la pluralité de portions de programme qui est la portion de programme la moins satisfaite des portions de programme classées, et la demande d'une ou de plusieurs unités de ressources de calcul (237) demandant une quantité supplémentaire d'une ou de plusieurs unités de ressources de calcul (237) pour la portion de programme la moins satisfaite qui augmente le rapport de satisfaction actuel pour la portion de programme la moins satisfaite jusqu'à une valeur inférieure à un mais supérieure au rapport de satisfaction actuel pour une portion de programme qui est la deuxième portion de programme la moins satisfaite des portions de programme classées.

2. Procédé selon la revendication 1, dans lequel une portion de programme est un membre de l'ensemble le moins satisfait si son rapport de satisfaction associé, sur la totalité de la pluralité de portions de programme, est le minimum des rapports de satisfaction associés, et dans lequel la demande d'une ou de plusieurs unités de ressources de calcul (237) demande une quantité d'unités de ressources de calcul (237) qui est inférieure ou égale à une quantité telle que, après que la demande d'une ou de plusieurs unités de ressources de calcul (237) a été accordée, chaque portion de programme dans l'ensemble le moins satisfait aura un rapport de satisfaction qui est toujours plus petit qu'un rapport de satisfaction d'au moins une portion de programme qui n'est pas un membre de l'ensemble le moins satisfait.

3. Procédé selon la revendication 2, dans lequel la demande d'une ou de plusieurs unités de ressources de calcul (237) demande une quantité de ressources de calcul (237) qui est supérieure ou égale à une quantité telle que, après que la demande d'une ou de plusieurs unités de ressources de calcul (237) a été accordée, chaque portion de programme dans l'ensemble le moins satisfait aura un rapport de satisfaction qui est au moins aussi grand qu'un rapport de satisfaction d'au moins une portion de programme qui n'est pas un membre de l'ensemble le moins satisfait.

4. Procédé selon la revendication 1, dans lequel une portion de programme est un membre de l'ensemble le moins satisfait si son rapport de satisfaction associé, sur la totalité de la pluralité de portions de programme, est le minimum des rapports de satisfaction associés, et dans lequel la demande d'une ou de plusieurs unités de ressources de calcul (237), et dans lequel la demande d'une ou de plusieurs unités de ressources de calcul (237) demande une quantité de ressources de calcul (237) qui est supérieure ou égale à une quantité telle que, après que la demande d'une ou de plusieurs unités de ressources de calcul (237) a été accordée, chaque portion de programme dans l'ensemble le moins satisfait aura un rapport de satisfaction qui est au moins aussi grand qu'un rapport de satisfaction d'au moins une portion de programme qui n'est pas un membre de l'ensemble le moins satisfait.

5.  Procédé selon l'une quelconque des revendications précédentes, dans lequel la demande d'une ou de plusieurs unités de ressources de calcul (237) demande la quantité supplémentaire, N, d'unités de ressources de calcul (237) pour la portion de programme la moins satisfaite de la pluralité de portions de programme selon N = [($G_R/T_R$ - $G_A/T_A$) x $T_A$] + 1, $G_R$ étant un nombre de ressources accordées à la deuxième portion de programme la moins satisfaite, $T_R$ étant un nombre de ressources cibles pour la deuxième portion de programme la moins satisfaite, $G_A$ étant un nombre de ressources accordées à la portion de programme la moins satisfaite, et $T_A$ étant un nombre de ressources cibles pour la portion de programme la moins satisfaite.

6.  Procédé selon l'une quelconque des revendications précédentes, dans lequel au moins une des portions de programme est associée à une quantité cible fixe de ressources de calcul (237) et au moins une des portions de programme est associée à une quantité cible variable de ressources de calcul (237), et la demande minimale pour chaque portion de programme associée à une quantité cible fixe de ressources de calcul (237) est une demande entière correspondant à la quantité cible complète de ressources de calcul (237), et la demande minimale pour chaque portion de programme associée à une quantité cible variable de ressources de calcul (237) est une demande associée d'une ou de plusieurs unités de ressources de calcul (237) correspondant à moins de la quantité cible complète de ressources de calcul (237).

7.  Procédé selon la revendication 6, dans lequel la demande minimale pour chaque portion de programme associée à une quantité cible variable de ressources de calcul (237) est une demande associée d'une ou de plusieurs unités de ressources de calcul (237) correspondant à une seule unité de ressources de calcul (237), où chaque quantité cible variable de ressources de calcul (237) est définie en termes d'une granularité de ressources de calcul (237) qui divise la quantité cible complète de ressources de calcul (237) en une pluralité d'unités de taille égale.

8.  Procédé selon l'une quelconque des revendications précédentes, dans lequel au moins certaines demandes dans au moins un ensemble de demandes correspondent à des quantités de ressources de calcul (237) de tailles différentes les unes des autres.

9.  Procédé selon l'une quelconque des revendications précédentes, dans lequel le stockage des informations spécifiant des quantités cibles de ressources de calcul (237) associées à des portions respectives de la pluralité de portions de programme inclut, pour au moins une portion de programme, la détermination de sa quantité cible associée de ressources de calcul (237) sur la base, au moins en partie, d'une entrée d'utilisateur.

10.  Procédé selon l'une quelconque des revendications précédentes, dans lequel les ressources de calcul (237) sont réparties sur une pluralité de nœuds informatiques.

11.  Procédé selon la revendication 10, dans lequel au moins certaines des portions de programme requièrent que leurs ressources de calcul (237) accordées soient obtenues d'un ou de plusieurs nœuds informatiques spécifiques de la pluralité de nœuds informatiques.

12.  Procédé selon la revendication 10 ou la revendication 11, dans lequel des ressources de calcul (237) associées à chaque demande de chaque ensemble de demandes de la pluralité d'ensembles de demandes doivent être obtenues d'un seul nœud informatique de la pluralité de nœuds informatiques.

13.  Procédé selon l'une quelconque des revendications précédentes, au moins certaines des portions de programme étant configurées pour traiter des éléments de données provenant d'une ou de plusieurs sources de données et le procédé incluant en outre la détermination des quantités cibles de ressources de calcul (237) pour chacune des portions de programme sur la base, au moins en partie, des éléments de données provenant de la ou des sources de données.

14.  Procédé selon la revendication 13, dans lequel la détermination des quantités cibles de ressources de calcul (237) pour chacune des portions de programme sur la base, au moins en partie, des éléments de données provenant de la ou des sources de données inclut, pour chaque portion de programme, l'ajout de ressources de calcul (237) associées à une seule instance de la portion de programme à la quantité cible de ressources de calcul (237) associée à la portion de programme pour chaque élément de données devant être traité par la portion de programme.

**15.** Procédé selon l'une quelconque des revendications précédentes, dans lequel chaque demande, de chaque ensemble de demandes de la pluralité d'ensembles de demandes, demande des ressources de calcul (237) requises par une seule instance d'une portion de programme donnée de la pluralité de portions de programme.

**16.** Procédé selon l'une quelconque des revendications précédentes, dans lequel une première portion de programme de la pluralité de portions de programme est associée à une pluralité de demandes provenant de la pluralité d'ensembles de demandes.

**17.** Procédé selon l'une quelconque des revendications précédentes, incluant en outre la réception, en réponse à l'ensemble initial de demandes, d'une indication qu'une ou plusieurs demandes de l'ensemble initial de demandes n'ont pas été satisfaites et l'abandon de l'exécution du programme sur la base de la réponse.

**18.** Support lisible par ordinateur stockant un logiciel pour demander, à un gestionnaire de ressources de calcul (120), des ressources de calcul (237) pour exécuter un programme informatique (224), ayant une pluralité de portions de programme, dans un système informatique (100), le logiciel incluant des instructions pour amener un système informatique (100) à réaliser le procédé selon l'une quelconque des revendications 1 à 17.

**19.** Système informatique (100) pour demander, à un gestionnaire de ressources de calcul (120), des ressources de calcul (237) pour exécuter un programme, ayant une pluralité de portions de programme, dans le système informatique (100), le système informatique (100) incluant :

un système de stockage de données stockant des informations spécifiant des quantités cibles de ressources de calcul (237) associées à des portions respectives des portions de programme ; et
au moins un processeur configuré pour réaliser le procédé selon l'une quelconque des revendications 1 à 17.

FIG. 1

102

| 242 | 244 | 246 | 248 | 250 |
|---|---|---|---|---|

252  254  256  258

260

224

2x      {239}      3x

| C1 (S-H1) 226 | C2 (FDL) 228 | C3 (VDL) 230 | C4 (VDL) 232 | C5 (VDL) 234 |
|---|---|---|---|---|

Resource Requesting Module 122

Resource Manager 120

237                                    112

H1    236          H2    238          H3    240

104

FIG. 2A

FIG. 2B

FIG. 3

FIG. 4

FIG. 5

FIG. 6

FIG. 7

FIG. 8

102

242    252
244    254
246    256
248    258
250    260

224

100%    100%    25%    50%

2x [5]    3x [3]    4x [4]    2x [5]    10x [2]

| C1 (S – H1) | C2 (FDL) | C3 (VDL) | C4 (VDL) | C5 (VDL) |
|---|---|---|---|---|
| 226 | 228 | 230 | 232 | 234 |

Resource Requesting Module

1x [5]

990

1x [5]

992

Resource Manager

237    112

H1    236    H2    238    H3    240

104

FIG. 9

FIG. 10

FIG. 11

FIG. 12

FIG. 13

FIG. 14

1000

```
for each program portion of a plurality of program
portions of a computer program, determining a target        1001
number of one or more instances of the program
portion that are required to be executed by a computing
system for the computer program to run
```

```
for each program portion of the plurality of
program portions, analyzing the program portion to          1002
determine a target quantity of computational resources
that are required to execute the required one or
more instances of the program portion
```

```
for each program portion of the
plurality of program portions, associating the program      1003
portion with a fulfillment ratio
```

```
submitting a plurality of requests, including first,
second and third requests, for computational resources      1004
to the computational resource manager module
```

```
receiving allocations, or indications of deemed
allocations, of computational resources to the program
portions of the plurality of program portions as            1005
requested in those one or more requests of the plurality
of requests that were granted by the computational
resource manager module based
on the available computational resources
```

FIG. 15

**EP 3 552 104 B1**

**Patent documents cited in the description**

- US 2012167112 A1
- US 2005210262 A1
- US 20070011668 A
- US 5966072 A